# EUROPEAN PATENT SPECIFICATION

(11) **EP 1 435 259 B1**
(45) Date of publication and mention of the grant of the patent: **20.07.2011**
(21) Application number: 02801551.9
(22) Date of filing: 11.10.2002
(51) Int. Cl.: B01D 9/02, B01D 9/00

(54) **METHOD AND APPARATUS FOR REMOVING ION PRESENT IN SOLUTION BY THE CRYSTALLIZATION METHOD**
VERFAHREN UND VORRICHTUNG ZUR ENTFERNUNG VON IN LÖSUNG VORLIEGENDEN IONEN DURCH DAS KRISTALLISATIONSVERFAHREN
PROCEDE ET DISPOSITIF D'EXTRACTION PAR CRISTALLISATION D'UN ION CONTENU DANS UNE SOLUTION

(30) Priority: 12.10.2001 JP 2001315548; 06.12.2001 JP 2001372734; 28.12.2001 JP 2001399269
(43) Date of publication of application: 07.07.2004
(73) Proprietor: Ebara Engineering Services Co., Ltd, Tokyo 144-8610 (JP)
(72) Inventor: SHIMAMURA, Kazuaki, Kamakura-shi, Kanagawa 247-0061 (JP); TANAKA, Toshihiro, Fujisawa-shi, Kanagawa 251-0015 (JP); MIURA, Yukiko, Fujisawa-shi, Kanagawa 251-0016 (JP); KATAOKA, Katsuyuki, Chigasaki-shi, Kanagawa 253-0006 (JP); ISHIKAWA, Hideyuki, Ohta-ku, Tokyo 145-0072 (JP)
(74) Representative: Wagner, Karl H.
(86) International application number: PCT/JP2002/010596
(87) International publication number: WO 2003/033098

(56) References cited:
- JP-A- 1 033 098
- JP-A- 10 323 677
- JP-A- 11 309 464
- JP-B1- 31 005 367
- JP-B1- 31 007 160
- US-A- 4 338 109

## Description

### TECHNICAL FIELD

The present invention relates to processes and apparatuses for removing or recovering specific ions from liquids, particularly processes and apparatuses for chemically reacting ions contained in various liquids such as phosphate, calcium, fluorine, carbonate and sulfate ions to separate out crystals of a slightly soluble salt having a uniform particle size, whereby such ions are removed efficiently and product crystals having stable properties are obtained.

### BACKGROUND ART

Crystallization is one of conventional methods for removing specific ions from liquids. Crystallization is a method for separating out crystals containing a specific ion by adding a compound including an ion capable of reacting with the specific ion contained in an influent to form a slightly soluble salt or by changing pH to establish a supersaturation of the ion in an influent.

As an example of crystallization, crystals of calcium phosphate (Ca₃(PO₄)₂) or hydroxyapatite (Ca₁₀(PO₄)₆(OH)₂): HAP) can be separated out by adding calcium when phosphate ion is to be removed from an influent consisting of a wastewater such as secondary sewage effluent or sidestreams from sludge treatment systems. When wastewater from semiconductor factories, which often contains much fluorine ion, is to be treated, fluorine ion in the wastewater can also be removed by adding a calcium source to separate out crystals of calcium fluoride (CaF₂). When calcium ion is to be removed from service water derived from groundwater, wastewater and refuse leachate, crystals of calcium carbonate can be separated out by raising pH or adding a carbonate source. Alternatively, the hardness of hard water containing much carbonate ion can be lowered by adding calcium ion to separate out crystals of calcium carbonate (CaCO₃). Among impurities in tap water, Mn can be removed as manganese carbonate (MnCO₃) by adding carbonate ion. Moreover, crystals of magnesium ammonium phosphate (MgNH₄PO₄: MAP) can also be separated out by adding magnesium to wastewater containing phosphate and ammonium ions such as the filtrate of sludge from anaerobic digestion or wastewater from fertilizer factories.

As an example, crystallization of MAP is explained below. It is said that MAP is produced by the following reaction of magnesium, ammonium, phosphorus and hydroxyl in a liquid.

Mg²⁺ + NH₄⁺ + HPO₄²⁻ + OH⁻ + 6H₂O → MgNH₄PO₄·6H₂O(MAP) + H₂O

Conditions for producing MAP are such that the product of the molar concentrations of phosphorus, ammonium, magnesium and hydroxyl (called as ion product and represented by [HPO₄²⁻] [NH₄⁺] [Mg²⁺] [OH⁻] where each ion within brackets is expressed in mol/liter) becomes the solubility product of MAP or more. If ammonium and magnesium present in an influent are equimolar or more to phosphorus, the phosphorus concentration can be further lowered.

The amount of magnesium added is preferably in a molar ratio of about 1.2 to phosphorus in the influent to achieve high efficiency. Main magnesium sources are magnesium chloride, magnesium hydroxide, magnesium oxide, magnesium sulfate and dolomite.

The reaction system used is a complete mixing or fluidized bed system, of which the latter is more frequently used in view of the solids/liquid separating performance. In the fluidized bed system, an influent is supplied in upflow to separate out a product on the surfaces of crystal nuclei (crystalline particles of the product or media such as sand) flown in a fluidized bed, whereby crystals are settled by gravity while the influent is recovered from the top so that crystallization reaction and solids/liquid separation can take place at the same time. When the particles flown in the fluidized bed here have a larger particle diameter, settling velocity of the particles increases, and the upflow velocity of raw water can therefore be increased and the throughput of influent can be increased.

Crystallization phenomenon consists of the nucleation phase in which crystal nuclei (microcrystals) are generated and the growth phase in which the crystal nuclei are grown. Generally, it is difficult to obtain coarse crystals of slightly soluble salts because the nucleation phase predominates over the growth phase due to the high reaction rate. In order to largely grow crystal nuclei, it is necessary to operate in such a manner that crystallization proceeds preferentially on the surfaces of crystal nuclei by limiting the degree of supersaturation not to produce new crystal nuclei.

In the fluidized bed system, the flow rate of the liquid rising in the reactor (hereinafter referred to as LV (linear velocity)) depends on the particle diameter of crystal nuclei in the reactor. The LV suitable for fluidization is normally about 1/10 of the settling velocity of crystal nuclei as determined by the Stokes or Allen equations.

In the presence of crystal nuclei of small particle diameters or microcrystals generated in the reactor, it is difficult to increase LV in the reactor because of their low settling velocity. This resulted in the tendency to greatly increase the volume of the apparatus. If such small nuclear particles or microcrystals are much contained, the effective reaction surface area per volume of the apparatus greatly increases to retard crystal growth or result in other problems.

On the other hand, crystals having relatively large particle diameters allow high LV in the reactor and high throughput per apparatus. However, the effective reaction surface area per apparatus is small so that crystalline particles are liable to overgrow. If crystalline particles overgrow, they become unflowable with time. If crystalline particles become unflowable, the reaction efficiency is lowered by non-uniform flow of raw water or other causes, inviting problems such as degraded water quality of effluent. In such cases, fluidization in the reactor can be resumed by increasing the feed rate of raw water to the reactor to increase LV, but the amount of chemicals for crystallization should also be increased and a complex operation is required to control the timing of increasing the feed rate or other problems arise.

To solve such problems, it was proposed to extract grown crystalline particles from the reactor and to add crystal nuclei having relatively small particle diameters to the reactor. Possible crystal nuclei to be added here include small crystalline particles of the product or particles of materials other than the product. However, this also has the disadvantages that additional equipment for adding crystal nuclei is required as well as the steps of selecting, separating (sorting) and adding crystal nuclei. Overgrown crystals may be divided and used for this purpose, but the process is complicated by additional steps.

When crystal nuclei having small particle diameters and large crystalline particles coexisted in the same reactor, LV had to be limited to suit crystal nuclei having small particle diameters, causing the problem that the volume of the apparatus becomes very large. The limited LV also caused the disadvantage that flow of crystalline particles having large particle diameters became poor, resulting in lowered water quality of effluent. In this case, LV can be increased by reducing the cross sectional area of the bottom of the reactor dominated by crystalline particles of large particle diameters, but the cross sectional area of the upper part of the apparatus dominated by crystal nuclei of small particle diameters must suit crystal nuclei of small particle diameters and after all the size of the apparatus cannot be reduced.

On the other hand, it may be possible to control the outflow or expansion rate of small crystal nuclei by adding crystal nuclei to the reactor, which have a particle diameter close to the particle diameter of crystal nuclei grown in the reactor, but this caused the problem that more crystal nuclei had to be added if large amounts of crystals were produced. When materials other than the product were added as crystal nuclei, the purity of the recovered product was poor.

In view of these problems of the prior art, the present invention was made to provide processes and apparatuses for removing ions in liquids by crystallization, which can achieve efficient and stable performance in removing ions in liquids and which can yield stable product crystals.

JP 10 323677 A discloses a waste water treatment device and was used as a basis for the preamble of claim 1. In order to provide a waste water treatment device in which phosphorus is recovered efficiently and economically as ammonium magnesium phosphate hexahydrate (MAP) from waste water containing phosphorus at high concentration, the waste water treatment device is equipped with a solid-liquid separation means (settling tank) for separating and removing solid content in waste water containing ammonium ions and phosphate ions, a seed crystal production tank in which fine crystal of MAP is produced by adding magnesium compound and a pH adjustor to waste water after solid-liquid separation and a dephosphorization tank in which fine crystal taken out of the seed crystal production tank is grown and ammonium ions and phosphate ions are removed.

### DISCLOSURE OF THE INVENTION

As a result of careful studies to solve the problems above, we accomplished the present invention on the basis of the finding that crystalline particles can be very efficiently grown by a process for removing an ion to be removed in an influent by crystallization, comprising growing crystalline particles in stages in two or more crystallization reactors, i.e. successively supplying crystalline particles grown in a reactor to the reactor at the subsequent stage where they are further grown, and changing the size of crystalline particles flown in each reactor so that larger crystalline particles are flown in reactors at later stages.

Accordingly, the present invention relates to an apparatus and a process for removing an ion to be removed in an influent by crystallization, as set forth in claim 1 and claim 5 respectively. Preferred embodiments of the present invention may be gathered from the dependent claims.

In the process of the present invention wherein crystalline particles grown at an earlier stage are supplied to the reactor at the subsequent stage where they are further grown as described above, the crystals to be grown in the reactor at the first stage may be generated in said reactor or externally supplied to said reactor.

Various aspects of the present invention are explained below with reference to the attached drawings.

### BRIEF EXPLANATION OF THE DRAWINGS

FIG. 1 is a schematic view showing the outline of a crystallization reactor for carrying out a process according to an aspect of the present invention.
FIG. 2 is a schematic view of a crystallization reactor according to another embodiment of the present invention. FIG. 2a is a plan view and FIG. 2b is a longitudinal sectional view of said reactor.
FIG. 3 is a schematic view of a crystallization reactor according to another embodiment of the present invention. FIG. 3a is a longitudinal sectional view and FIG. 3b is a plan view of said reactor.
FIG. 4 is a schematic view of a crystallization reactor according to the prior art used in Comparative example 1.
FIG. 5 is a schematic view of a crystallization reactor according to another embodiment of the present invention.
FIG. 6 is a schematic view of a crystallization reactor according to another embodiment of the present invention. FIG. 6a is a plan view and FIG. 6b is a longitudinal sectional view of said reactor.
FIG. 7 is a schematic view of a crystallization reactor according to another embodiment of the present invention.
FIG. 8 is a schematic view of a crystallization reactor according to the prior art used in Comparative example 2.
FIG. 9 is a schematic view of a crystallization reactor according to another embodiment of the present invention.
FIG. 10 is a schematic view of a crystallization reactor according to another embodiment of the present invention.
FIG. 11 is a schematic view of a crystallization reactor according to another embodiment of the present invention.
FIG. 12 is a schematic view of a crystallization reactor according to another embodiment of the present invention.
FIG. 13 is a schematic view of a crystallization reactor according to the prior art used in Comparative example 3.
FIG. 14 is a schematic view of a crystallization reactor according to an embodiment of the present invention used in Example 4.
FIG. 15 is a schematic view of a crystallization reactor according to the prior art used in Comparative example 4.
FIG. 16 is a schematic view of a crystallization reactor according to an embodiment of the present invention used in Example 5.
FIG. 17 is a schematic view of a crystallization reactor according to the prior art used in Comparative

### example 5.

### DETAILED DESCRIPTION OF THE INVENTION

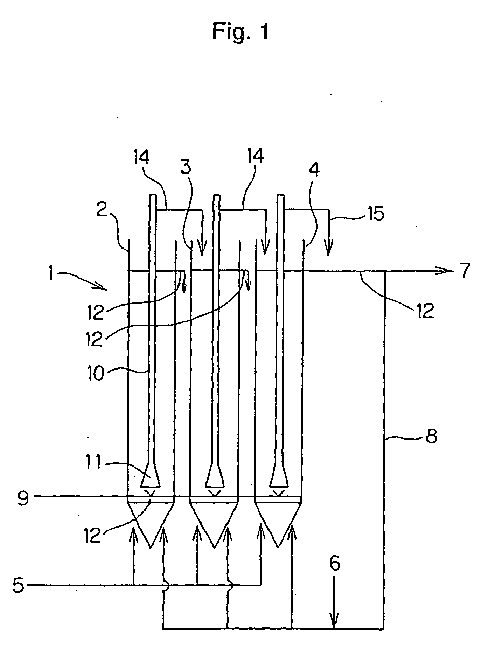

Referring first to Fig. 1, an aspect is explained according to which crystal nuclei are generated in the reactor at the first stage and grown.

Fig. 1 shows a specific example of an apparatus for carrying out a process according to the aspect of the present invention.

In Fig. 1, apparatus 1 forms a multistage apparatus comprising a first crystallization reactor 2, a second crystallization reactor 3 and a third crystallization reactor 4.

In the apparatus shown in Fig. 1, a feed pipe for raw water 5, a feed pipe for recycled water 8 formed of a part of effluent 7 and a feed pipe for air 9 are connected to the bottom of each of first crystallization reactor 2, second crystallization reactor 3 and third crystallization reactor 4. On the feed pipe for recycled water 8 formed of a part of effluent 7 is connected a feed pipe for chemicals 6 such as an ion capable of reacting with an ion to be removed in raw water to form a slightly soluble salt and a pH regulator for regulating the pH of liquid. A fluidized bed can be formed by feeding an upflow of raw water 5 from the bottom of each crystallization reactor to fluidize crystals present in each crystallization reactor only with the upflow of liquid. If raw water and chemicals must be supplied to the top of each crystallization reactor by any other reaction system than the fluidized bed system, the feed pipes for raw water 5 and chemicals 6 may be connected to the top of each crystallization reactor. Other suitable means for fluidizing crystalline particles than upflow circulation of liquid include mechanical agitation and pneumatic agitation.

A suitable means for transferring crystals grown in each crystallization reactor to the reactor at the subsequent stage is an airlift pipe 10 shown in Fig. 1. The airlift is a pipe having a lower end submerged in a liquid in a tank and an upper end above the liquid level (lifting pipe) and capable of lifting the liquid in the tank above the liquid level in the tank by injection of compressed air into the lower end so that the apparent specific gravity of the liquid mixed with bubbles in the lifting pipe becomes lower than the specific gravity of the liquid outside the pipe and thereby the liquid level in the pipe rises above the liquid level in the tank, and such a pipe is widely used in the fields of discharging settled sludge from night-soil septic tanks, discharging sludge from grit tanks and transporting solids from deep sea floors. In the apparatus shown in Fig. 1, airlift pipe 10 is included in each crystallization reactor and a nozzle 12 for injecting air 9 is placed beneath each airlift pipe 10. Airlift pipe 10 has a bubble collecting skirt 11 at the bottom. When air 9 is injected from the air nozzle beneath airlift pipe 10, particles of large particle diameters falling in the crystallization reactor is sucked into airlift pipe 10 with liquid and transferred to the crystallization reactor at the subsequent stage.

By using an airlift pipe as a means for transferring crystal nuclei grown in each crystallization reactor to the subsequent stage, the installation cost can be reduced when a multistage transferring means must be installed as in the present invention and very stable continuous operation can be achieved because the amount of crystals transferred can be controlled only by switching an air valve. Moreover, only crystalline particles of large particle diameters in each crystallization reactor 2, 3, 4 can be selectively transferred by very easy operation.

When grown crystalline particles are intermittently transferred to the reactor at the subsequent stage, air may be injected only during transferring the crystalline particles or constantly insofar as the particles are not transferred to the subsequent stage except during transfer. When air is constantly injected, blockage by crystalline particles in the airlift pipe can be prevented. Except during transfer, crystalline particles raised by the airlift effect may be constantly returned to the upper or middle zone in the same crystallization reactor. This produces a circulating flow of crystalline particles in the crystallization reactor to give crystalline particles having a uniform particle diameter.

An effluent pipe 12 is connected to the top of each crystallization reactor 2, 3, 4. If any ion to be removed in raw water 5 and/or any ion or compound capable of reacting with an ion to be removed to form a slightly soluble salt remains in the effluent from each crystallization reactor, effluent pipe 12 of each crystallization reactor may be connected to the bottom of the same crystallization reactor to recycle the effluent in the same reactor. Although Fig. 1 shows an embodiment in which effluents from first reactor 2 and second reactor 3 are discharged out of the system via effluent pipe 12 and a part of the largest effluent from third reactor 4 is recycled, effluents from the individual reactors may be combined and recovered as effluent 7 or effluent from each reactor may be supplied to the reactor at the subsequent stage.

In each crystallization reactor 2, 3, 4, an ion capable of reacting with an ion to be removed in raw water 5 to form a slightly soluble salt is supplied to an excessive concentration via feed pipe 6, thereby promoting the crystallization of the slightly soluble salt to lower the concentration of the ion to be removed. The optimal reaction pH for an intended crystallization reaction depends on the desired product, but is preferably adjusted in each reactor 2, 3, 4 to avoid significant changes in pH in any case. Each reactor is preferably equipped with a pH meter for measuring the pH of liquid.

In the apparatus shown in Fig. 1, crystal nuclei are generated by reacting an ion to be removed in raw water 5 in first crystallization reactor 2. The particles of crystal nuclei just generated are minute but remain in the same reactor without flowing out by keeping a sufficiently low LV. When crystallization occurs on the surfaces of crystal nuclei, the crystal nuclei grow to increase the settling velocity. Crystalline particles sufficiently grown stop moving in first crystallization reactor 2 and settle at the bottom of the reactor. Upon injecting air from air nozzle 12 into airlift pipe 10, the crystalline particles grown and settled are lifted as slurry with liquid in airlift pipe 10 and sent to second crystallization reactor 3 via product crystal transfer pipe 14. Air is discharged from an opening at the upper end of airlift pipe 10.

In crystallization reactors 3, 4 at the second and subsequent stages, crystalline particles grown in the preceding stage are transferred while raw water 5 is supplied. Grown crystalline particles may be transferred intermittently or continuously, and in the former case, raw water 5 is supplied after crystalline particles grown in the preceding stage have been transferred. Growth of crystal nuclei becomes dominant by controlling the feeding of raw water 5 to establish a degree of supersaturation at which crystal nuclei are not generated. As crystallization proceeds, the settling velocity of crystalline particles becomes higher than LV in the reactor again. In order to fluidize such crystalline particles having increased particle diameters, the upflow velocity of liquid should preferably be increased with the stage of the reactor. Specifically, the upflow velocity of liquid can be increased with the stage of the reactor by increasing the amount of raw water supplied to each crystallization reactor with the stage of the crystallization reactor. Thus grown crystalline particles are successively transferred to the subsequent stage where they are further grown so that effluent 7 can be recovered via effluent pipe 12 and crystalline particles can be recovered via product crystal recovery pipe 15 from the crystallization reactor at the final stage (e.g. third crystallization reactor 4 in the apparatus shown in Fig. 1). The recovered crystalline particles can be product crystals. For example, MAP (magnesium ammonium phosphate) can be directly used as a slow-acting fertilizer and other crystals can also be used as fertilizers or raw materials for chemical products or the like.

A part of effluent 7 can be supplied to the bottom of each crystallization reactor 2, 3, 4 as recycled water 8 after chemicals 6 are added. By recycling a part of effluent 7 as recycled water, the liquid volume passing through the crystallization reactor can be increased and the upflow velocity in the crystallization reactor can be increased without excessively increasing the concentration of the ion reacting with the ion to be treated.

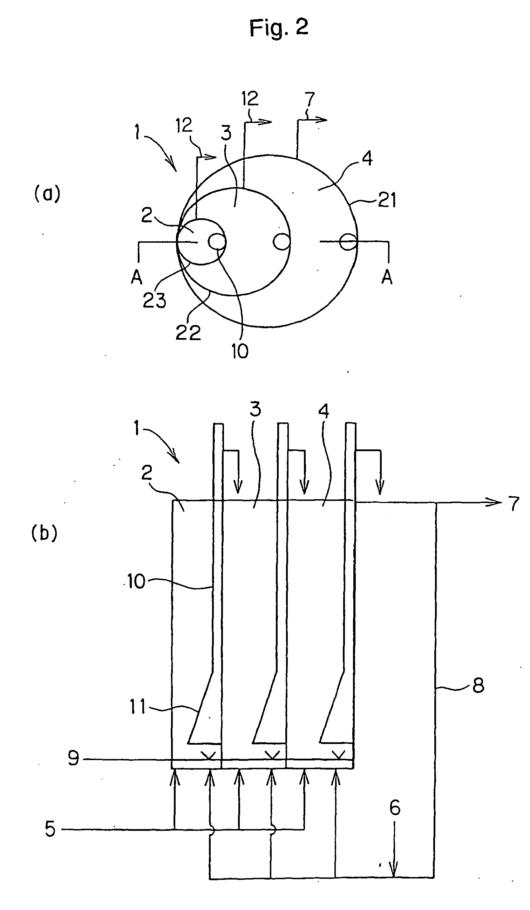

Although Fig. 1 shows an embodiment in which each crystallization reactor consists of a separate chamber, an apparatus of the present invention can also comprise first crystallization reactor 2, second crystallization reactor 3 and third crystallization reactor 4 by successively including chambers having smaller diameters 22, 23 in chamber 21 as shown in Fig. 2. Here, Fig. 2a is a plan view of an apparatus according to an embodiment of the present invention, and Fig. 2b is a longitudinal sectional view along A-A line in Fig. 2a. In Fig. 2, the same elements as those in Fig. 1 are designated by the same reference numbers.

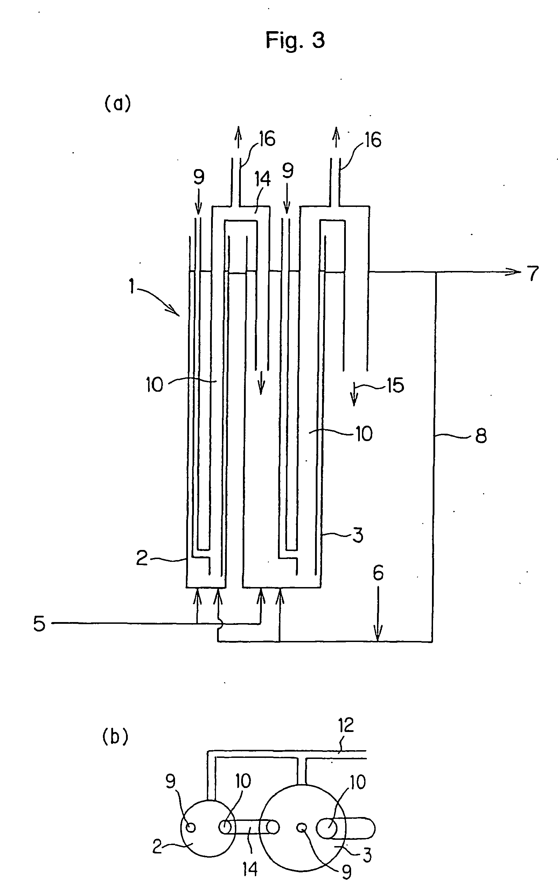

As for the airlift pipe, a feed pipe for air 9 can be directly connected to the bottom of airlift pipe 10 as shown in Fig. 3. Here, Fig. 3a is a longitudinal sectional view of an apparatus according to another embodiment of the present invention, and Fig. 3b is a plan view of said apparatus. In this case, grown crystalline particles falling in reactor 1 are sucked into airlift pipe 10 from an opening at the bottom of the airlift pipe with the aid of an upflow of bubbles-water mixed liquid in airlift pipe 10 and transferred to the crystallization reactor at the subsequent stage via grown particle transfer pipe 14, while air injected into airlift pipe 10 is discharged via exhaust pipe 16 at the top of airlift pipe 10. The apparatus shown in Fig. 3 comprises two crystallization reactors wherein effluents from first crystallization reactor 2 and second crystallization reactor 3 are combined in effluent pipe 12 and recovered as effluent 7 while grown crystals are recovered as 15.

In the apparatus of the present invention, the amount of raw water 5 supplied to each crystallization reactor 2, 3, 4 is preferably smaller so that the amount of crystallized products is smaller in reactors where crystalline particles of smaller particle diameters are flown. For example, when a 3-stage crystallization apparatus is used and crystalline particles in each crystallization reactor are to have twice the particle diameter at the preceding stage (i.e. 2³=8 times the volume), the amount of crystalline particles transferred from the reactor at the preceding stage may be 1/8 of the amount of crystalline particles transferred to the reactor at the subsequent stage. That is, the amount of crystallized products in a reactor at an earlier stage may be 1/8 of the amount of crystallized products in the reactor at the subsequent stage. If the amount of raw water supplied to first crystallization reactor 2 is here supposed to be 1Q, the amount of raw water supplied to second crystallization reactor 3 will be 8Q and the amount of raw water supplied to third crystallization reactor 4 will be 64Q.

As described above, it is difficult to increase LV in the reactor using crystalline particles having small particle diameters because of the low settling velocity. This resulted in the tendency to greatly increase the volume of the reactor. When crystalline particles having different particle diameters were to be flown in the same reactor, there was also the tendency to increase the volume of the reactor because LV in the reactor had to be selected to suit the settling velocity of crystalline particles having small particle diameters. According to the present invention, crystalline particles can be flown at a suitable LV for the particle diameter of crystalline particles in each crystallization reactor by successively increasing the size of crystalline particles flown in each crystallization reactor. This can reduce the amount of raw water supplied to the crystallization reactor in which crystalline particles having a smaller particle diameter are flown (i.e. a crystallization reactor at an earlier stage) and thereby reduce the size of said crystallization reactor, thus greatly contributing to the size reduction of the apparatus. Moreover, the crystallization efficiency can be increased by increasing the amount of raw water to the crystallization reactor in which crystalline particles having a larger particle diameter are flown (i.e. a crystallization reactor at a later stage) and therefore increasing LV in said reactor to improve flow of crystalline particles. In one embodiment of the present invention as described above, pure crystals can be obtained because crystal nuclei are generated in first crystallization reactor 2 and grown into product crystals. Moreover, the use of an airlift as a means for transferring grown crystalline particles can provide an apparatus that is easy to operate.

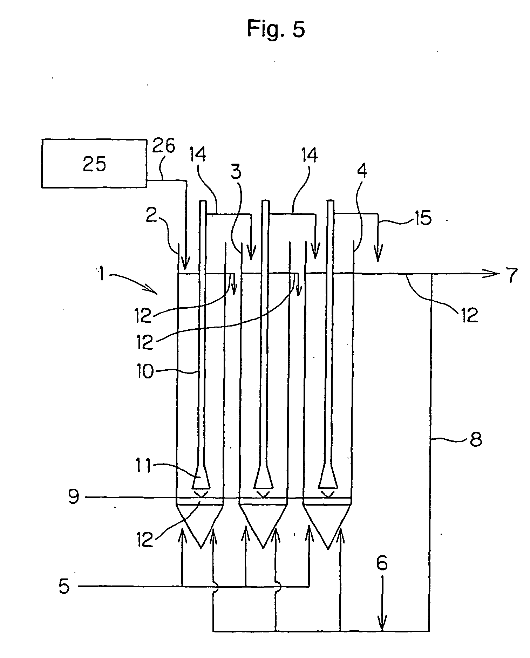

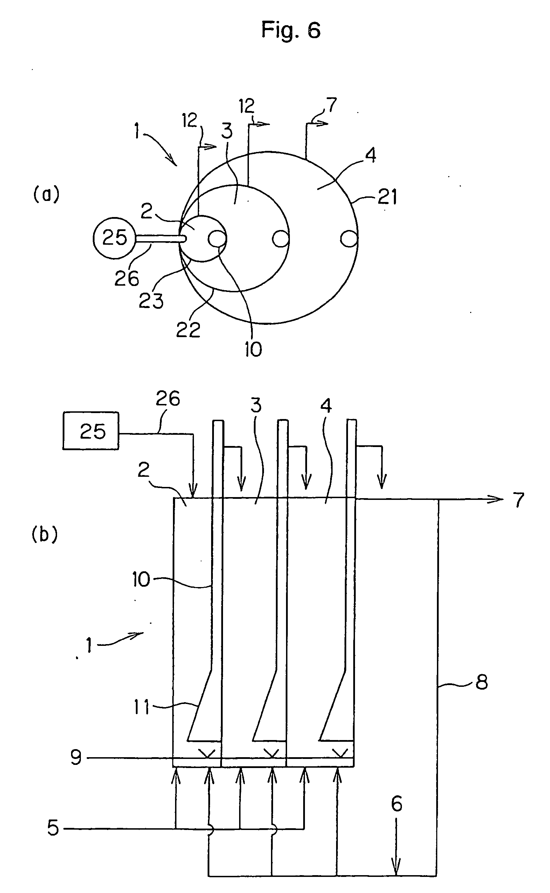

In the process of the present invention described above, crystal nuclei may not be generated in the first crystallization reactor but alternatively can be added to the first crystallization reactor and grown. Apparatuses according to this embodiment of the present invention are shown in Figs. 5-7. The apparatuses shown in Figs. 5-7 are equivalent to the apparatuses shown in Figs. 1-3 except that a crystal nucleus reservoir 25 is connected to first crystallization reactor 2 via crystal nucleus feed pipe 26. The operation is also as described with reference to Figs. 1-3 except that crystal nuclei are added to the first crystallization reactor, and therefore only distinctive features are explained below while common operations are not explained.

In the apparatuses shown in Figs. 5-7, first crystallization reactor 2 is equipped with a means for adding crystal nuclei. The crystal nuclei preferably contain components of the crystallization product and may be sand optionally coated with the product. Suitable crystal nuclei are those on which a desired crystallization product can be deposited on their surfaces. The crystal nuclei are supplied from crystal nucleus reservoir 25 to first crystallization reactor 2 via crystal nucleus feed pipe 26.

In the first reactor, crystals of a slightly soluble salt of an ion of interest to be removed are deposited on the surfaces of the crystal nuclei added. Growth of crystals becomes dominant by feeding raw water to establish a degree of supersaturation at which microcrystalline nuclei are not generated in the liquid. As crystallization proceeds, the settling velocity of grown crystalline particles becomes higher than LV.

The amount of raw water supplied to each reactor is preferably smaller and therefore the amount of crystallized products is smaller in reactors where crystalline particles of smaller particle diameters are flown. When a 3-stage crystallization apparatus is used and crystalline particles in each crystallization reactor are to have twice the particle diameter at the preceding stage (i.e. 2³=8 times the volume), the amount of crystalline particles transferred from the reactor at the preceding stage may be 1/8 of the amount of crystalline particles transferred to the reactor at the subsequent stage. That is, the amount of crystallized products in a reactor at an earlier stage may be 1/8 of the amount of crystallized products in the reactor at the subsequent stage. If the amount of raw water supplied to the first crystallization reactor is here supposed to be 1Q, the amount of raw water supplied to the second crystallization reactor will be 8Q and the amount of raw water supplied to the third crystallization reactor will be 64Q.

By performing the operation above, the crystal nuclei added to the first crystallization reactor are gradually grown and successively transferred to the reactor at the subsequent stage and further grown into product crystals. The product crystals have a much larger particle diameter than that of the crystal nuclei added to the first crystallization reactor, so that they contain a very low proportion of impurities (crystal nuclei added to the first crystallization reactor). If sand particles of 0.1 mm are added to the first crystallization reactor to give product crystals of 0.5 mm, for example, the proportion of sand in the product crystals is only 0.8%. By using this process, the proportion of impurities can be easily reduced to a very low level.

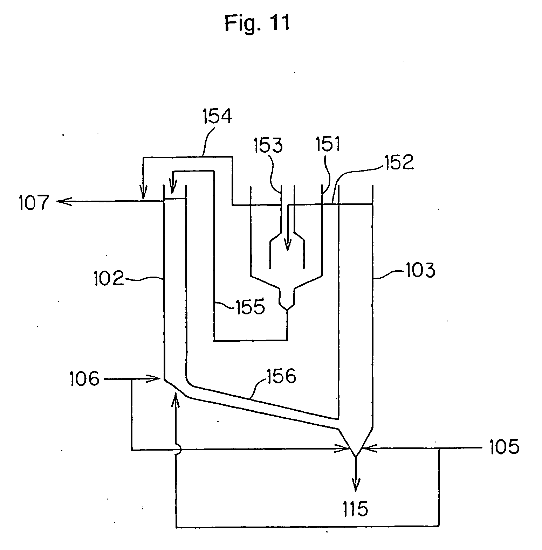

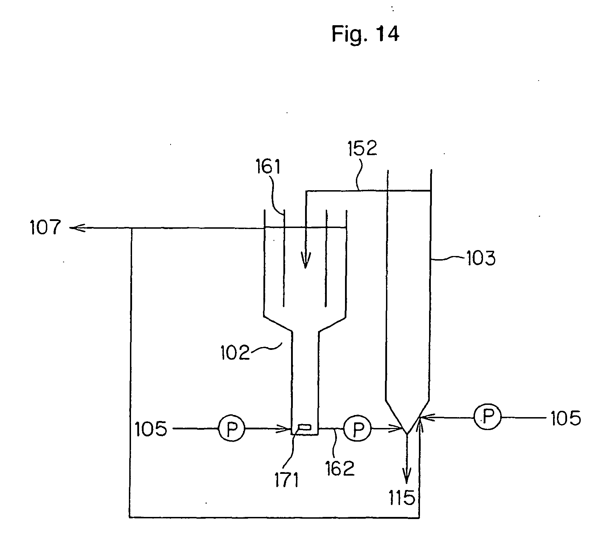

Although the foregoing description relates to embodiments of the invention in which an airlift pipe is used to transfer grown crystalline particles from a crystallization reactor at an earlier stage to the crystallization reactor at the subsequent stage, according to an apparatus process not according to the invention grown crystalline particles can also be transferred from a crystallization reactor at an earlier stage to the crystallization reactor at the subsequent stage by settling under gravity as in the embodiment shown in Fig. 11 described below or by pumping as in the embodiment shown in Fig. 14 described below, for example.

According to the process of the present invention described above, an ion to be removed in an influent can be efficiently removed by crystallization using a multistage crystallization apparatus in which crystals are grown in stages in each reactor. However, problems may arise from microcrystalline nuclei generated in crystallization reactors at later stages under some conditions.

Normally, ions to be removed in influent are crystallized on the surfaces of crystalline particles (crystal nuclei) flown in a fluidized bed, but slightly soluble salts are liable to per se produce microcrystalline particles. Therefore, microcrystalline particles may be generated even in crystallization reactors at later stages under some operating conditions of the crystallization reactors. Microcrystals expand at the top of a fluidized bed. If large amounts of microcrystals exist, they may run out with effluent from the reactor to affect performance in removing ions to be removed because microcrystals have a very high expansion rate and a very low settling velocity. Normally, crystalline particles grow when they stay in a fluidized bed, but particles grow very slowly at the top of the fluidized bed where little supersaturation remains as for each ion concentration in influent.

Thus, it is preferred that the fewest possible microcrystalline particles are generated in each crystallization reactor, especially crystallization reactors at later stages. To prevent generation of microcrystalline particles, the concentration of ions to be removed in influent can be lowered or the inflow load of ions to be removed can be lowered. However, it is very difficult to totally avoid generation of microcrystalline particles.

Therefore, some means should be taken for preventing microcrystalline particles from running out with effluent even if they are generated. For example, the development rate of microcrystalline particles may be controlled by using a crystallization reactor having a larger cross sectional area at the top than the bottom to limit the upflow velocity of liquid. However, this has the disadvantage that the volume of the apparatus increases. Another possible means is that microcrystalline particles are extracted and dissolved in an unsaturated state in liquid so that they are reionized and then crystallized again. However, this is not always an advantageous method in terms of the cost of chemicals and the complexity of process.

In view of the above, we further studied and found that ions to be removed can be more efficiently crystallized in a crystallization system of the present invention comprising a multistage crystallization apparatus by transferring microcrystalline particles generated in a crystallization reactor at a later stage to a crystallization reactor at an earlier stage where they are sufficiently grown and then successively transferred to the crystallization reactor at the subsequent stage. Accordingly, a more preferred second aspect of the present invention relates to a process for removing an ion in a liquid using a multistage crystallization reactor as described above, characterized in that microcrystalline particles contained in a crystallization reactor at a later stage are transferred to a crystallization reactor at an earlier stage and grown and thus grown crystalline particles are successively transferred to the crystallization reactor at the subsequent stage.

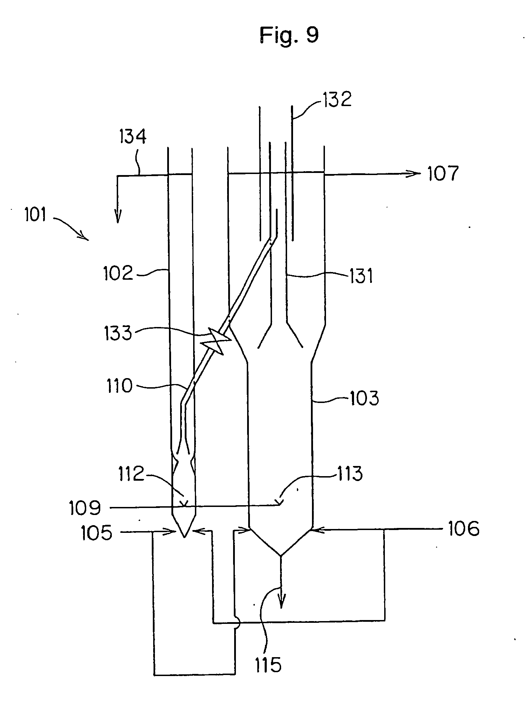

Referring to Fig. 9, a crystallization reaction system according to the second aspect of the present invention is explained.

Fig. 9 shows an embodiment of an apparatus that can be used to carry out the more preferred second aspect of the present invention. In the apparatus shown in Fig. 9, apparatus 101 comprises a first crystallization reactor 102 and a second crystallization reactor 103. However, more than two crystallization reactors may be installed as shown in Fig. 1 or the like.

In the apparatus shown in Fig. 9, a feed pipe for raw water 105 and a feed pipe for chemicals 106 such as an ion capable of reacting with an ion to be removed in raw water 105 to form a slightly soluble salt and a pH regulator for regulating the pH of liquid are connected to the bottom of each of first crystallization reactor 102 and second crystallization reactor 103. A feed pipe for air 109 is also connected to the bottom of each of the first and second crystallization reactors. First crystallization reactor 102 and second crystallization reactor 103 each form a reaction zone at a lower part where crystals of the slightly soluble salt are grown by reaction between the ion to be removed in raw water 105 and said additive ion.

In the case of the apparatus shown in Fig. 9, second crystallization reactor 103 has an upper enlarged part including an inner cylinder 131 having a bell-shaped bottom so that air (bubbles) supplied from air nozzle 113 at the bottom of crystallization reactor 103 is discharged via said inner cylinder 131, thereby forming a solids/liquid separator as a whole. The liquid containing microcrystalline particles rising from the lower reaction zone in crystallization reactor 103 slows down so that microcrystals drop in the part having an enlarged inner diameter and enter with rising bubbles into the bell of inner cylinder 131 and remain in inner cylinder 131. Thus, microcrystals are flown in inner cylinder 131. An exit pipe for effluent 107 is connected to the top of second crystallization reactor 103.

In the case of the apparatus shown in Fig. 9, the upper end of inner cylinder 131 is preferably surrounded by another cylinder 132 because the upper end of inner cylinder 131 projects above the liquid level surrounding inner cylinder 131 to release air therefrom to equilibrate the hydraulic pressure at the lower end of the inner cylinder with the surrounding pressure in view of the specific gravity lowered by the presence of the liquid containing bubbles in inner cylinder 131 but bubbles burst or overflows splash at the upper end. If the upper end of the wall of second crystallization reactor 103 is raised, another cylinder 132 is unnecessary but costs add up.

An airlift pipe 110 also serving as a transfer pipe (simply referred to as "airlift pipe") is included in first crystallization reactor 102 and an exit pipe 134 for effluent from the first crystallization reactor is connected at the top of first crystallization reactor 102. Airlift pipe 110 is connected to the reaction zone of second crystallization reactor 103 or inner cylinder 131. A role of said airlift pipe 110 is to transfer microcrystalline particles in inner cylinder 131 in second crystallization reactor 103 to first crystallization reactor 102. When the apparatus is operated under the condition that valve 133 on airlift pipe 110 is opened and the upflow air from air nozzle 112 in first crystallization reactor 102 is decreased or stopped to halt activity of the airlift, microcrystalline particles in inner cylinder 131 in second crystallization reactor 103 spontaneously fall into first crystallization reactor 102. Thus, microcrystalline particles are transferred from a crystallization reactor at a later stage to a reactor at an earlier stage.

Another role of said airlift pipe 110 is to transfer grown crystalline particles having increased particle diameters grown in first crystallization reactor 102 to second crystallization reactor 103 by the airlift with the aid of bubbles from air nozzle 112, as described below. By connecting an end of airlift pipe 110 into the reaction zone in second crystallization reactor 103 or inner cylinder 131, crystals can be prevented from running out from the second reactor with liquid during transfer of crystals.

The ion to be removed in raw water 105 flowing into second crystallization reactor 103 is crystallized by reacting with an ion 106 capable of reacting with the ion to be removed to form a slightly soluble salt on the surfaces of particles already flown in the reactor. During then, microcrystalline nuclei may be produced in the liquid under some operating conditions.

In second crystallization reactor 103, agitation takes place by air 109 injected from nozzle 113 so that microcrystalline particles are flown in inner cylinder 131 in the upper zone of reactor 103, as described above. Airlift pipe 110 connected to first crystallization reactor 102 is inserted into inner cylinder 131 so that microcrystals fall in airlift pipe 110 to first crystallization reactor 102. The amount of microcrystalline particles introduced into first crystallization reactor 102 can be controlled by valve 133 or the like on airlift pipe 110. In order to introduce microcrystalline particles from second crystallization reactor 103 into first crystallization reactor 102, a transfer pipe separate from airlift pipe 110 may be used in combination with a pump or the like. Although the explanation above and below mainly relates to embodiments in which crystalline particles are transferred by a batch method, i.e. transfer of grown crystalline particles from the first reactor to the second reactor and transfer of microcrystalline particles from the second reactor to the first reactor take place intermittently, it will be readily understood by those skilled in the art that crystalline particles can be continuously transferred by providing a transfer pipe separate from the airlift pipe or other means. Thus, grown crystalline particles can be continuously transferred from the first reactor to the second reactor via an airlift pipe and at the same time microcrystalline particles can be continuously transferred from the second reactor to the first reactor via a separate transfer pipe. The liquid treated in second crystallization reactor 103 is discharged as effluent 107 from an upper effluent pipe.

As the amount of crystallized products in second crystallization reactor 103 increases over time, grown crystalline particles 115 are extracted from the bottom of second crystallization reactor 103 at appropriate time. If aeration from nozzle 113 is here stopped and only an upflow of raw water 105 is maintained for at least 5 minutes, crystalline particles in second crystallization reactor 103 are classified and only crystalline particles having large particle diameters can be settled, whereby only particles sufficiently grown to large particle diameters can be selectively recovered.

As described above, microcrystalline particles settled in second crystallization reactor 103 are transferred to first crystallization reactor 102 via airlift pipe 110 by spontaneous settling. During then, feeding of raw water 105 to first crystallization reactor 102 is preferably stopped.

Microcrystalline particles generated in second crystallization reactor 103 and introduced into first crystallization reactor 102 are grown in first crystallization reactor 102.

The growth speed of microcrystalline particles depends on the inflow load of raw water 105. Thus, the higher the inflow load, the higher the growth speed, while the lower the inflow load, the lower the growth speed. However, it should be noted here that microcrystals further increase if the inflow load is excessively high.

A means for transferring crystalline particles grown in first crystallization reactor 102 to second crystallization reactor 103 may be an airlift as described above. The feed pipe for air 105 is distributed to first crystallization reactor 102 and second crystallization reactor 103 and typically supplies a larger amount of air to second crystallization reactor 103 during normal operation in the apparatus having the structure as shown in Fig. 9. In order to transfer grown crystalline particles from the first crystallization reactor to the second crystallization reactor via an airlift, a large amount of air can be supplied to first crystallization reactor 102 by temporarily stopping air supply to second crystallization reactor 103, whereby a necessary amount of air for transferring grown crystalline particles can be obtained.

During transferring grown crystals from first crystallization reactor 102 to second crystallization reactor 103 via an airlift, feeding of raw water 105 and air 109 to second crystallization reactor 103 is preferably stopped.

Crystalline particles grown in first crystallization reactor 102 are transferred to second crystallization reactor 103 and then stay in second crystallization reactor 103 to further grow. Then, grown crystals are extracted as product crystals 115 from the bottom of the column.

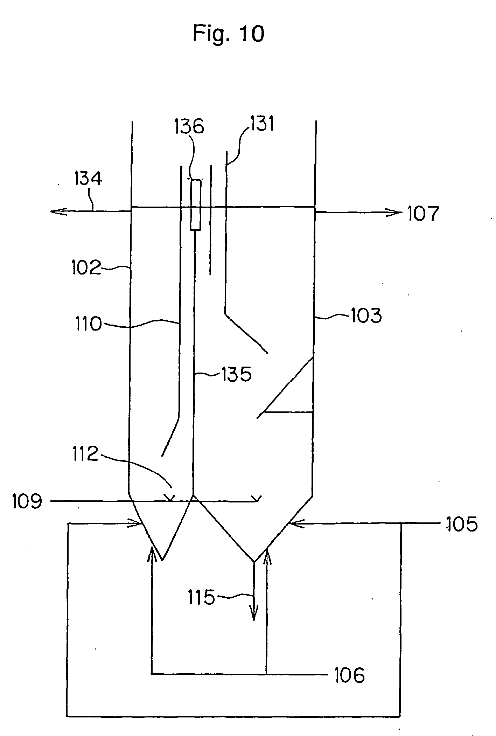

Transfer of crystalline particles between the first and second crystallization reactors can also be performed by combining an airlift pipe with a movable weir as shown in Fig. 10. In the apparatus shown in Fig. 10, first crystallization reactor 102 and second crystallization reactor 103 are adjoining and a side wall partitioning both reactors forms a part of airlift pipe 110. The upper end of the side wall forming a part of airlift pipe 110 is below the liquid level and may be extended upward by a vertically movable weir 136. During normal operation, movable weir 136 projects above the liquid level to block liquid flow between the first crystallization reactor and the second crystallization reactor.

Once crystalline particles in first crystallization reactor 102 have been grown to a certain size, the amount of air injected from nozzle 112 into first crystallization reactor 102 is increased to lift grown crystalline particles with liquid in airlift pipe 110 by the airlift effect above movable weir 136 and transfer them to second crystallization reactor 103. When the liquid level in first crystallization reactor 102 then falls, movable weir 136 is lowered to transfer the liquid containing microcrystalline particles staying (suspended) in inner cylinder 131 in second crystallization reactor 103 to first crystallization reactor 102. Once a predetermined amount of microcrystalline particles have been transferred, movable weir 136 is raised again to resume normal operation.

As described above, microcrystalline particles generated in the second crystallization reactor (a crystallization reactor at a later stage) are transferred to the first crystallization reaction (a crystallization reactor at an earlier stage) and sufficiently grown and then transferred to the second crystallization reactor and further grown, whereby the number of microcrystalline particles in second crystallization reactor 103 decreases and the particle diameter in the second crystallization reactor becomes more uniform. Moreover, the particle diameter of crystalline particles grown in first crystallization reactor 102 and transferred to second crystallization reactor 103 is smaller than the particle diameter of crystals flown in second crystallization reactor 103, whereby the average particle diameter in second crystallization reactor 103 decreases and overgrowth of particles in second crystallization reactor 103 can be prevented. The uniform particle diameter in the reactor leads to stable removal performance over a long period.

An apparatus having a configuration as shown in Fig. 11 can also be used as another embodiment of an apparatus for carrying out the second aspect of the present invention.

In the apparatus shown in Fig. 11, the apparatus comprises a first crystallization reactor 102 and a second crystallization reactor 103 together with a solids/liquid separator 151 inserted between both reactors.

A feed pipe for raw water 105 and a feed pipe for chemicals 106 such as an ion capable of reacting with an ion to be removed in raw water 105 to form a slightly soluble salt and a pH regulator for regulating the pH of liquid are connected to the bottom of each of first crystallization reactor 102 and second crystallization reactor 103.

The top of second crystallization reactor 103 is connected to the top of solids/liquid separator 151 via an effluent pipe 152, and effluent from the top of second crystallization reactor 103 is supplied to the top of inner cylinder 153 in a solids/liquid separator 151 (specifically a settling tank and therefore hereinafter referred to as "settling tank 151") and runs down in inner cylinder 153. The liquid running down in inner cylinder 153 turns at the bottom of settling tank 151 and rises around inner cylinder 153 to the upper zone in settling tank 151 while microcrystalline particles fall and settle at the bottom of settling tank 151. In this way, effluent and microcrystalline particles from said second crystallization reactor are separated between solids and liquid. The liquid separated from solids in settling tank 151 is discharged as effluent 107 from effluent pipe 154 at the top of settling tank 151. On the other hand, microcrystalline particles settled at the bottom of settling tank 151 are sent as slurry to the top of first crystallization reactor 102 via microcrystal transfer pipe 155.

The bottom of first crystallization reactor 102 is supplied with raw water 105 from a raw water feed pipe as well as chemicals 106 such as an ion capable of reacting with an ion to be removed in raw water 105 to form a slightly soluble salt and a pH regulator for regulating the pH of liquid, which form as a gentle upflow in first crystallization reactor 102 so that microcrystalline particles supplied from settling tank 151 serve as nuclei to grow crystalline particles of the ion to be removed. At the bottom of first crystallization reactor 102, an aerator (not shown) is provided for the purpose of promoting flow of microcrystalline particles. The aerator may be replaced by mechanical agitation or the like. The bottom of first crystallization reactor 102 is connected to the bottom of second crystallization reactor 103 via grown crystalline particle feed pipe 156, so that crystalline particles having a somewhat large diameter grown in first crystallization reactor 102 are transferred to second crystallization reactor 103 by gravity settling and further grown in second crystallization reactor 103. Crystalline particles grown in second crystallization reactor 103 are settled at the bottom of second crystallization reactor 103 by gravity and recovered as grown crystalline particles 115.

Raw water 105 is continuously supplied in upflow to the bottom of first crystallization reactor 102 and the bottom of second crystallization reactor 103. If only inflow of raw water 105 does not suffice to ensure a necessary upflow velocity of liquid in each reactor, a part of effluent 107 may be supplied to the bottom of first crystallization reactor 102 or the bottom of second crystallization reactor 103.

In second crystallization reactor 103, crystalline particles having an average diameter of e.g. 1-2 mm are fluidized by an upflow of raw water 105 and grown as the ion to be removed in the raw water reacts and thereby becomes crystallized on the surfaces of the crystalline particles. If crystalline particles are poorly fluidized in the second crystallization reactor, aeration or mechanical agitation may be used. For example, when the liquid flow rate in the second crystallization reactor is 20-70 m/hr, crystalline particles having a particle diameter of 1-2 mm are fluidized well.

Effluent containing microcrystalline particles of e.g. 50-200 µm runs out from the top of second crystallization reactor 103.

Settling tank 151 has a larger cross sectional area than that of second crystallization reactor 103 to limit the upflow velocity of liquid, thereby separately recovering microcrystalline particles. In this case, the volume of settling tank 151 can be reduced by e.g. adding a polymer flocculant into effluent from the second crystallization reactor just before entering settling tank 151 to advance sedimentation more efficiently.

In first crystallization reactor 102, microcrystalline particles of e.g. about 50-500 µm are flown and grown as the ion to be removed in influent 5 reacts and becomes crystallized on the surfaces of the microcrystalline particles flown in the same manner as in second crystallization reactor 103. The liquid flow rate in first crystallization reactor 102 is lower than in second crystallization reactor 103, such as 2-20 m/hr. When the residence time of microcrystalline particles in the second crystallization reactor is e.g. 5-10 days, MAP microparticles of 50-200 µm running out from second crystallization reactor 103 grow to about 300-500 µm.

Crystalline particles grown to a certain level of size in first crystallization reactor 102 are continuously or intermittently transferred to second crystallization reactor 103 via grown crystalline particle feed pipe 156. Crystalline particles are supplied to any of the top, middle or bottom of second crystallization reactor 103 (e.g. the bottom of the second crystallization reactor in the embodiment shown in Fig. 11). Supplying means may be a feed pipe 156 as shown in Fig. 11 or a pump 20 or the like.

When crystalline particles grown to e.g. 0.3-0.5 mm in the first crystallization reactor are continuously or intermittently supplied to second crystallization reactor 103, the average particle diameter of crystalline particles present in second crystallization reactor 103 can be controlled by changing the amount of crystalline particles supplied.

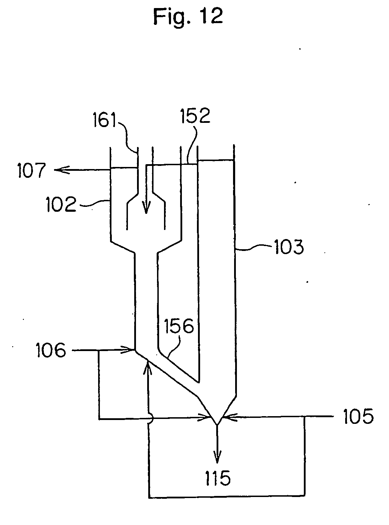

Fig. 12 shows another embodiment of an apparatus not according to the invention that can be used to carry out a process according to the second aspect of the present invention. In the apparatus shown in Fig. 12, the apparatus comprises a first crystallization reactor 102 and a second crystallization reactor 103, and a settling tank is not independent but incorporated into first crystallization reactor 102. First crystallization reactor 102 has an upper part having a greater diameter than the lower part, and an inner cylinder 161 having a similar shape to that of inner cylinder 153 in Fig. 11 is included in the upper part of first crystallization reactor 102. In first crystallization reactor 102 of such an embodiment, the upper part serves as a settling zone and the lower part serves as an aging zone. Thus, the upper part of first crystallization reactor 102 has a larger cross sectional area than that of the lower part of the reactor to limit the upflow velocity so that solids/liquid separation by sedimentation of microcrystalline particles proceeds, and the upflow velocity in the upper part of the reactor is preferably controlled in such a manner that microcrystalline particles transferred from second crystallization reactor 103 fall down. In this case, a polymer flocculant may preferably be added to the liquid just before entering the settling zone in the same manner as described about the apparatus shown in Fig. 11 to reduce the volume of the settling zone.

A feed pipe for raw water 105 and a feed pipe for chemicals 106 such as an ion capable of reacting with an ion to be removed in raw water 105 to form a slightly soluble salt and a pH regulator for regulating the pH of liquid are connected to the bottom of each of first crystallization reactor 102 and second crystallization reactor 103.

The top of second crystallization reactor 103 is connected to the top of first crystallization reactor 102 via an effluent pipe 152 so that effluent containing microcrystalline particles running out from the top of second crystallization reactor 103 is supplied to the top of an inner cylinder 161 included in the upper part of first crystallization reactor 102 and flows down in inner cylinder 161. The liquid flow running down in inner cylinder 161 then turns at the lower end of the upper part of first crystallization reactor 102 (the narrowed part of the reactor) and joins the liquid flow rising from the lower part of the reactor and rises together around inner cylinder 161, while microcrystalline particles transferred from the second crystallization reactor spontaneously fall by gravity. In this manner, effluent from first crystallization reactor 102 and microcrystalline particles contained therein are separated between solids and liquid. The liquid separated from solids in the upper part of first crystallization reactor 102 is discharged as effluent 107 via an effluent pipe at the top of the upper part of first crystallization reactor 102.

The bottom of first crystallization reactor 102 is supplied with raw water 105 and chemicals 106 such as an ion capable of reacting with an ion to be removed in raw water 105 to form a slightly soluble salt and a pH regulator for regulating the pH of liquid, which form a gentle upflow in reactor 102. First crystallization reactor 102 has a smaller diameter in the lower part than the upper part, and therefore a higher liquid upflow velocity in the lower part than the upper part. Thus, microcrystalline particles falling by gravity from the upper part of first crystallization reactor 102 are moved up again by the faster liquid upflow in the lower part of first crystallization reactor 102. As a result, microcrystalline particles stay at an approximately middle height in the upper part of first crystallization reactor 102. In this way, microcrystalline particles stay near the upper middle height of first crystallization reactor 102, while the ion to be removed in the liquid reacts to grow the crystalline particles. This gives crystalline particles having a somewhat large diameter. The bottom of first crystallization reactor 102 is connected to second crystallization reactor 103 via crystalline particle transfer pipe 156, through which the crystalline particles having a somewhat large diameter grown in first crystallization reactor 102 are transferred to second crystallization reactor 103 where they are further grown.

In the apparatus shown in Fig. 12, the settling zone is incorporated into first crystallization reactor 102, which eliminates the necessity of providing a separate settling tank 151 to simplify the structure.

In the upper part of first crystallization reactor 102, microcrystalline particles of_e.g. about 50-500 µm are flown and the ion to be removed in raw water 105 reacts and thereby becomes crystallized on the surfaces of microcrystalline particles in the same manner as in second crystallization reactor 103. The liquid flow rate in first crystallization reactor 102 is lower than in second crystallization reactor 103, such as 2-20 m/hr. When the residence time of microcrystalline particles in first crystallization reactor 102 is e.g. 5-10 days, microcrystalline particles of e.g. 50-200 µm running out from second crystallization reactor 103 can be grown to about 300-500 µm. Microcrystalline particles grown in first crystallization reactor 102 can be continuously or intermittently transferred to second crystallization reactor 103.

Depending on the feed rate of raw water 105, microcrystalline particles of e.g. 0.3-0.5 mm can be grown to particles of e.g. about 1.5-2 mm when the residence time of crystalline particles in second crystallization reactor 103 is e.g. about 10-40 days. The amount of microcrystalline particles supplied to second crystallization reactor 103 is preferably e.g. 1/10-1/40 of the amount of crystalline particles extracted from 115.

In the apparatus having the structure shown in Fig. 12, the effluent containing microcrystalline particles leaving second crystallization reactor 103 can also be supplied to the bottom of first crystallization reactor 102.

Although the foregoing explanation about the second aspect relates to embodiments using a solids/liquid separating (settling) means or a settling tank to separate microcrystalline particles from effluent from a crystallization reactor at a later stage, it will be apparent to those skilled in the art that microcrystalline particles in a reactor at a later stage can also be transferred to a reactor at an earlier stage by e.g. directly transferring effluent from the upper part of the crystallization reactor at the later stage to the crystallization reactor at the earlier stage by appropriately controlling operating conditions, without especially using a solids/liquid separating means or the like.

The following examples further illustrate the present invention without, however, limiting the invention thereto.

### Example 1

Effluent from UASB (upflow anaerobic sludge blanket apparatus) was used to perform a phosphorus removal treatment in the treatment apparatus shown in Fig. 3. The apparatus comprises a first crystallization reactor 2 and a second crystallization reactor 3. First crystallization reactor 2 was in the form of a cylinder having a diameter of 10 cm and a height of 3 m, and second crystallization reactor 3 was in the form of a cylinder having a diameter of 25 cm and a height of 3 m. Each reactor was equipped with a pH meter (not shown).

Effluent from UASB was adjusted to predetermined phosphorus and ammonium levels with monopotassium phosphate and ammonium chloride, if desired. The adjusted liquid was used as raw water. In first crystallization reactor 2, crystal nuclei of MAP were generated and held and grown by keeping the LV in the reactor sufficiently low. In second crystallization reactor 3, the crystal nuclei generated and grown in first crystallization reactor 2 were further grown.

Raw water 5 and partial effluent 8 were supplied in upflow from the bottom of each crystallization reactor in combination with addition of magnesium chloride and pH adjustment to 8.5 to crystallize MAP on MAP particle surfaces. The feed rate of raw water was 1 m³/d for the first crystallization reactor and 10 m³/d for the second crystallization reactor.

Water feeding conditions to each crystallization reactor are shown in Table 1.

**Table 1: Water feeding conditions in Example 1**

| | First crystallization reactor | Second crystallization reactor |
|---|---|---|
| Flow rate of raw water 5 (m3/d) | 1 | 10 |
| Flow rate of recycled water 8 (m3/d) | 0.9 | 14 |
| LV (m/hr) | 10 | 20 |
| Reaction pH | 8.5 | 8.5 |

Transfer of the MAP particles generated and grown in the first crystallization reactor to the second crystallization reactor and extraction of the MAP particles grown in the second crystallization reactor were performed by a batch method as follows. The frequency of extraction was every 5 days.

### (1) Extraction of grown MAP particles from second crystallization reactor 3

They were extracted using an airlift pipe having an outer diameter of 40 mm at an air flow rate of 30 NL/min. During extraction, only recycled water was supplied while feeding of raw water was stopped.

### (2) Transfer of grown MAP particles from first crystallization reactor 2 to second crystallization reactor 3

Then, the air valve was switched to first crystallization reactor 2 and the particles were also extracted using an airlift pipe having an outer diameter of 40 mm at an air flow rate of 30 NL/min. During extraction, only recycled water was supplied while feeding of raw water was stopped in the same manner as for the second crystallization reactor.

### (3) Raw water feeding

Feeding of raw water was resumed.

The average particle diameter of MAP particles transferred from first crystallization reactor 2 to second crystallization reactor 3 was 0.28-0.35 mm. The MAP particles having an average particle diameter of 0.28-0.35 mm transferred from the first crystallization reactor grew to 0.43-0.52 mm in the second crystallization reactor.

By using an airlift, crystals could be readily extracted.

During water feeding for about 30 days, the water quality of raw water and effluent was determined daily. The average water quality during 30 days is shown in Table 2. The water quality of effluent represents that of the combined effluents from the first and second crystallization reactors. As compared with T-P (total phosphorus) = 110 mg/L of raw water, T-P of effluent was 15 mg/L, showing a phosphorus recovery as good as 86%.

**Table 2: Water quality of raw water and effluent in Example 1**

| | Raw water | Effluent |
|---|---|---|
| pH | 7.5 | 8.5 |
| SS (mg/L) | 100 | 120 |
| T-P (mg/L) | 110 | 15 |
| PO₄-P (mg/L) | 100 | 5.6 |
| NH₄-N (mg/L) | 250 | 200 |
| Mg (mg/L) | 5 | 80 |

### Comparative example 1

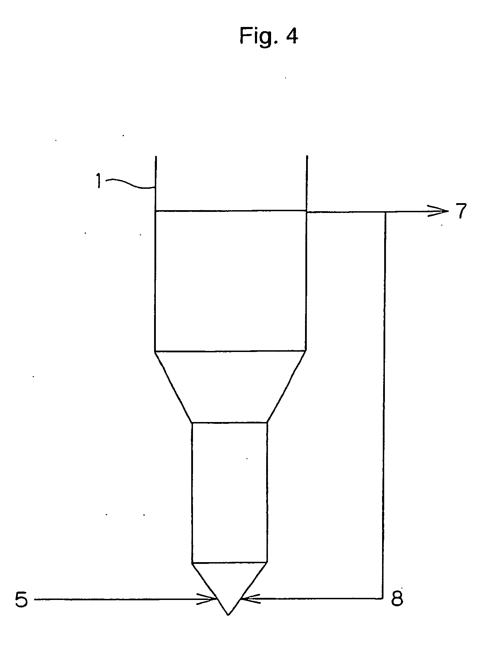

Effluent from UASB was used to perform a phosphorus removal treatment in the treatment apparatus shown in Fig. 4. Crystallization reactor 1 was a column consisting of a lower half having a diameter of 25 cm and an upper half having a diameter of 36 cm. The reactor was equipped with a pH meter (not shown). Effluent from UASB was adjusted to predetermined phosphorus and ammonium levels with monopotassium phosphate and ammonium chloride, if desired. The adjusted liquid was used as raw water. Raw water 5 and a part 8 of effluent were supplied in upflow from the bottom of reactor 1 in combination with addition of magnesium chloride and pH adjustment to 8.5 to crystallize MAP on the surfaces of MAP particles generated. The feed rate of raw water was 11 m³/d.

The water feeding conditions to the crystallization reactor are shown in Table 3.

**Table 3: Water feeding conditions in Comparative example 1**

| | |
|---|---|
| Flow rate of raw water 5 (m³/d) | 11 |
| Flow rate of recycled water 8 (m³/d) | 0.9 |
| LV (m/hr) in the upper half of the column | 10 |
| LV (m/hr) in the lower half of the column | 20 |
| Reaction pH | 8.5 |

During water feeding for about 30 days, the water quality of raw water and effluent was determined daily. The average water quality of raw water and effluent during 30 days is shown in Table 4. As compared with T-P = 100 mg/L of raw water, T-P of effluent was 35 mg/L, showing a phosphorus recovery of 65%.

Crystals were extracted every 5 days from the bottom of the column. The particle diameter of the extracted MAP crystals was as fine as 0.10-0.3 mm. The particle diameter distribution widely varied.

The effluent water quality was poor and the distribution of recovered crystals varied in Comparative example 1 using an apparatus having a cross sectional area of 0.102 m², i.e. approximately twice the total cross sectional area 0.057 m² of the apparatus used in Example 1.

**Table 4: Water quality of raw water and effluent in Comparative example 1**

| | Raw water | Effluent |
|---|---|---|
| pH | 7.5 | 8.5 |
| SS (mg/L) | 120 | 130 |
| T-P (mg/L) | 100 | 35 |
| PO₄-P (mg/L) | 98 | 6.6 |
| NH₄-N (mg/L) | 230 | 190 |
| Mg (mg/L) | 5 | 70 |

### Example 2

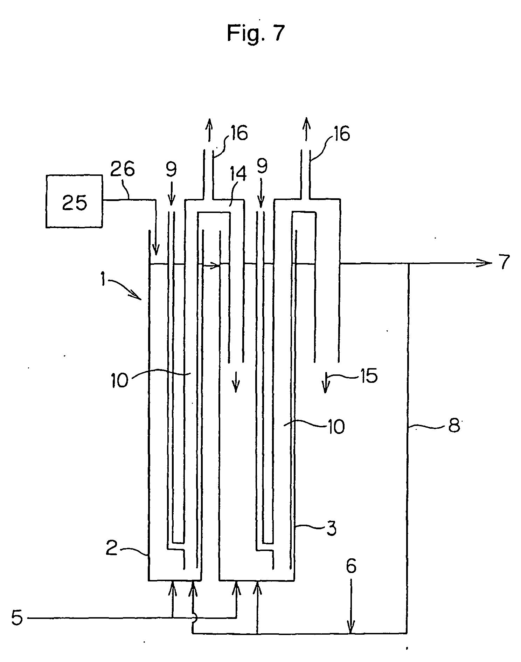

Effluent from a biological treatment system was used to perform a phosphorus removal treatment in the treatment system shown in Fig. 7. Apparatus 1 comprises a first crystallization reactor 2 and a second crystallization reactor 3. First crystallization reactor 2 was in the form of a cylinder having a diameter of 10 cm and a height of 3 m, and second crystallization reactor 3 was in the form of a cylinder having a diameter of 25 cm and a height of 3 m. Each reactor was equipped with a pH meter (not shown).

Effluent from the biological treatment system was adjusted to a predetermined phosphorus level with monopotassium phosphate, if desired, and used as raw water. Sand particles having an average particle diameter of 0.2 mm were added as crystal nuclei via crystal nucleus feed pipe 26 from crystal nucleus reservoir 25 to first reactor 2 (at an initial packing height of about 0.3 m) and grown. In second reactor 3, the crystalline particles grown in the first reactor were transferred and further grown. During then, the crystalline particles grown in the first reactor were transferred to the second reactor in an amount equivalent to a plate height of about 1 m.

Raw water and a part of effluent were supplied in upflow from the bottom of each reactor in combination with addition of calcium chloride and pH adjustment to 9 to crystallize hydroxyapatite (HAP) on the surfaces of crystalline particle. The feed rate of raw water was 1 m³/d for the first reactor and 10 m³/d for the second reactor. Water feeding conditions are shown in Table 5.

**Table 5: Water feeding conditions in Example 2**

| | First crystallization reactor | Second crystallization reactor |
|---|---|---|
| Flow rate of raw water 5 (m³/d) | 1 | 10 |
| Flow rate of recycled water 8 (m³/d) | 0.9 | 14 |
| LV (m/hr) | 10 | 20 |
| Initial diameter of sand particles (mm) | 0.2 | - |
| Reaction pH | 9 | 9 |

Transfer of the HAP particles grown in the first crystallization reactor to the second crystallization reactor and extraction of the HAP particles grown in the second crystallization reactor were performed by a batch method as follows. The frequency of extraction was once in about 3 months.

### (1) Extraction of grown HAP particles from second crystallization reactor 3

They were extracted using an airlift pipe having an outer diameter of 40 mm at an air flow rate of 30 NL/min. During extraction, only recycled water was supplied while feeding of raw water was stopped.

### (2) Transfer of grown HAP particles from first reactor 2 to second reactor 3

Then, the air valve was switched to first crystallization reactor 2 and the particles were also extracted using an airlift pipe having an outer diameter of 40 mm at an air flow rate of 60 NL/min. During extraction, only recycled water was supplied while feeding of raw water was stopped in the same manner as for the second reactor.

### (3) Addition of fresh sand (0.2 mm) to the first reactor

Then, fresh sand particles having an average particle diameter of 0.2 mm were added to first crystallization reactor 2 in an amount equivalent to a plate height of about 0.3 m (about 4 kg).

### (4) Raw water feeding

Feeding of raw water was resumed.

In the first reactor, the crystalline particles having an initial particle diameter (the particle diameter of sand particles) = 0.2 mm grew to 0.28-0.35 mm (average 0.30 mm) and the packing height also increased from 0.3 m to about 1 m. In the second reactor, the crystalline particles grown to the particle diameter of 0.28-0.35 mm (average 0.30 mm) in the first reactor grew to 0.40-0.50 mm (average 0.46 mm). The proportion of sand (impurities) in the product was about 8% while produced HAP occupied 90% or more.

The amount of sand used in the experimental period (1 year) was 17 kg and the amount of recovered crystal nuclei was about 220 kg.

By using an airlift, crystal nuclei could be readily extracted.

During water feeding for about 12 months, the water quality of raw water and effluent was determined daily. The average water quality of raw water and effluent during 12 months is shown in Table 6. The water quality of effluent represents that of the combined effluents from the first and second reactors. As compared with T-P = 11.5 mg/L of raw water, T-P of effluent was 1.8 mg/L, showing a phosphorus recovery as good as 84%.

**Table 6: Water quality of raw water and effluent in Example 2**

| | Raw water | Effluent |
|---|---|---|
| pH | 7.2 | 9.0 |
| SS (mg/L) | 10 | 11 |
| T-P (mg/L) | 11.5 | 1.8 |
| PO₄-P (mg/L) | 10 | 0.5 |
| Ca (mg/L) | 20 | 100 |

### Comparative example 2

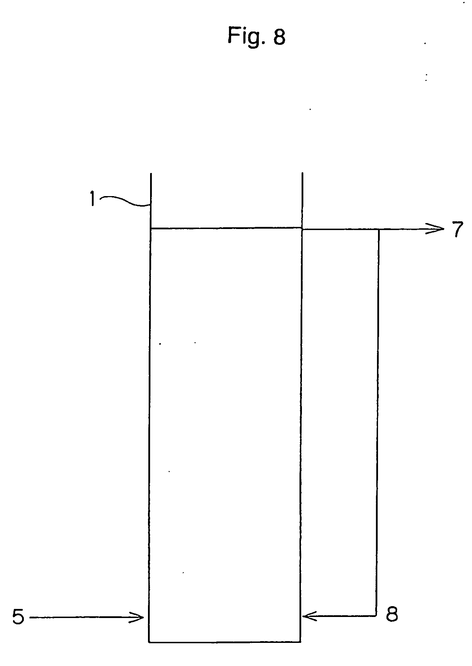

The raw water prepared in the same manner as in Example 2 was subjected to a phosphorus removal treatment in the treatment system shown in Fig. 8. Reactor 1 was in the form of a cylinder having a diameter of 25 cm and a height of 3 m. The reactor was equipped with a pH meter (not shown). Sand of 0.3 mm was added as a crystal nucleus to the reactor in an amount equivalent to a plate height of about 1.2 m. Raw water 5 and/or partial effluent 8 were supplied in upflow from the bottom of the reactor in combination with addition of calcium chloride and pH adjustment to 9 to crystallize HAP on the surfaces of sand particles. The feed rate of raw water was 10 m³/d. Water feeding conditions are shown in Table 7.

**Table 7: Water feeding conditions in Comparative example 2**

| | |
|---|---|
| Flow rate of raw water 5 (m³/d) | 10 |
| Flow rate of recycled water 8 (m³/d) | 14 |
| LV (m/hr) | 20 |
| Initial diameter of sand particles (mm) | 0.3 |
| Reaction pH | 9 |

The reactor was totally evacuated and crystal nuclei were added every 3 months.

During water feeding for about 12 months, the water quality of raw water and effluent was determined daily. The average water quality of raw water and effluent during 12 months is shown in Table 8. As compared with T-P = 12.1 mg/L of raw water, T-P of effluent was 5.0 mg/L, showing a phosphorus recovery of 59%.

**Table 8: Water quality of raw water and effluent in Comparative example 2**

| | Raw water | Effluent |
|---|---|---|
| pH | 7.3 | 9.0 |
| SS (mg/L) | 10 | 13 |
| T-P (mg/L) | 12.1 | 5.0 |
| PO₄-P (mg/L) | 11 | 1.8 |
| Ca (mg/L) | 20 | 100 |

The average particle diameter of the recovered product HAP crystalline particles was 0.38 mm and the proportion of sand in the product was as high as 53%. Over the experimental period, the amount of sand particles added was about 80 kg and the amount of recovered crystal nuclei was about 150 kg.

As compared with Example 2, the phosphorus recovery was lower by 25 points and the recovery of crystal nuclei was about 70% despite of 4-5 times the amount of sand used.

### Example 3 ,

Effluent from methane fermentation was used as raw water to perform a phosphorus removal treatment in the treatment system shown in Fig. 9. The apparatus comprises a first crystallization reactor 102 and a second crystallization reactor 103. First crystallization reactor 102 was a column having an inner diameter of 50 mm and a height of 2000 mm. Second crystallization reactor 103 was a column having a lower inner diameter of 150 mm and an upper inner diameter of 300 mm and a height of 3600 mm. Each reactor was equipped with a pH meter (not shown). In the upper part of second crystallization reactor 103 was included an inner cylinder 131 having a diameter of 50 mm and a height of 1000 mm. Inner cylinder 131 has a flared open lower end (see Fig. 9). As shown in Fig. 9, first crystallization reactor 102 is connected to inner cylinder 131 included in the upper part of second crystallization reactor 103 via airlift pipe 110 having a diameter of 25 mm and a height of 1200 mm and a flared open lower end. Effluent from methane fermentation containing phosphorus and ammonium was combined with magnesium ion and an alkali to crystallize magnesium ammonium phosphate (MAP).

Properties of the effluent from methane fermentation (raw water) are shown in Table 10. Raw water was supplied in upflow from the bottom of second crystallization reactor 103. When the operation was started, MAP particles having a particle diameter of 1.5 mm were added as crystal nuclei to the second crystallization reactor (in an amount equivalent to a plate height of about 2 m). A part of effluent 107 from second crystallization reactor 103 was also supplied to second crystallization reactor 103. Operating conditions in second crystallization reactor 103 are shown in Table 9. During normal operation, the inside of second crystallization reactor 103 was agitated by injecting air at 5 L/min from the bottom of the reactor and the microcrystalline particles generated in the reactor were directed into upper inner cylinder 131. The effluent was discharged from the top of second crystallization reactor 103. The crystals increased in the second crystallization reactor were extracted from the bottom of the reactor at appropriate time (115).

Valve 133 on airlift pipe 110 connecting the upper inner cylinder in second crystallization reactor 103 and first crystallization reactor 102 was opened, whereby a predetermined amount of MAP microcrystalline particles directed to the top of second crystallization reactor 103 were transferred from second crystallization reactor 103 to first crystallization reactor 102 via airlift pipe 110. The diameter of MAP microparticles transferred from second crystallization reactor 103 to first crystallization reactor 102 was about 0.1 mm.

Operating conditions in the first crystallization reactor are shown in Table 9. MAP microcrystals grew to 0.3-0.5 mm by staying in first crystallization reactor 102 for about 1 week. During the growth of MAP microcrystalline particles, valve 133 on airlift pipe 110 was closed.

Then, grown MAP particles were transferred to second crystallization reactor 103. Supply of air 109 to second crystallization reactor 103 was stopped and valve 133 on airlift pipe 110 was opened to supply air into first crystallization reactor 102 at a rate of 30 L/min. As a result, grown MAP particles were transferred to the second crystallization reactor via the airlift.

Transfer of grown crystals and microcrystals was performed according to the following cycle. Growth of crystals was continued for a week, then grown crystals were transferred from the first reactor to the second reactor by the airlift and then microcrystals were transferred from the second reactor to the first reactor via airlift pipe 110.

The water quality of effluent after continuous water feeding for 30 days in the apparatus above is shown in Table 10. As compared with T-P content =120 mg/L of raw water 105, T-P of effluent 107 was 18 mg/L, showing a phosphorus removal of 85%. The average diameter of MAP particles in second crystallization reactor 103 was stable in the range of 1.2-1.5 mm without extremely small or extremely large particles.

**Table 9: Water feeding conditions in Example 3**

| | First crystallization reactor | Second crystallization reactor |
|---|---|---|
| Flow rate of raw water (m³/d) | 0.3 | 8.0 |
| Flow rate of recycled effluent (m³/d) | - | 8.0 |
| LV (m/hr) | 5-15 | 9 (upper part) 37 (lower part) |
| Initial diameter of MAP particles (mm) | - | 1.5 |

**Table 10: Water quality of raw water and effluent in Example 3**

| | Raw water | Effluent |
|---|---|---|
| pH | 7.9 | 8.5 |
| SS (mg/L) | 200 | 220 |
| Soluble PO₄-P (mg/L) | 110 | 6.0 |
| T-P (mg/L) | 120 | 18 |
| NH₄-N (mg/L) | 250 | 200 |
| Mg (mg/L) | 2.6 | 50 |

### Comparative example 3

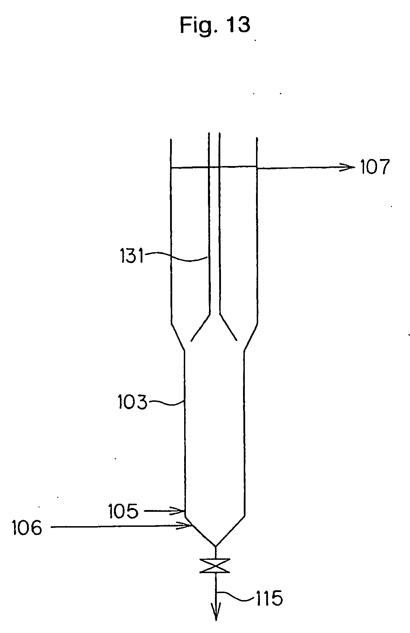

Effluent from methane fermentation was used to perform a comparative experiment in the treatment apparatus shown in Fig. 13. The experimental apparatus in the present comparative example was similar to the apparatus used in Example 3 except that first crystallization reactor 102 and airlift pipe 110 were absent, and raw water was supplied along with magnesium and an alkali to the bottom of crystallization reactor 103 under the water feeding conditions shown in Table 11. When the operation was started, MAP particles having a particle diameter of 1.5 mm were added as crystal nuclei to crystallization reactor 103 (in an amount equivalent to a plate height of about 2 m). Grown MAP particles in crystallization reactor 103 were extracted from 115 at appropriate time. In the same manner as in Example 3, a part of effluent 107 from crystallization reactor 103 was recycled to crystallization reactor 103.

The particle diameter of extracted MAP tended to increase day by day, such as 2 mm on day 10, 2.5 mm on day 20 and 3.1 mm on day 30 after water feeding was started.

The water quality of effluent 107 assessed as phosphorus removal was 80% or more when the particle diameter of MAP crystalline particles in the reactor was 1.5-2.0 mm, but tended to deteriorate when the particles further grew. Properties of effluent 107 after 30 days are shown in Table 12. As compared with T-P content =120 mg/L of raw water, T-P of effluent was 40 mg/L, showing a phosphorus removal of 67%. When SS in effluent was examined, fine needle-like MAP crystals were found in addition to SS from raw water. The decreased removal may be attributed to the fact that large amounts of MAP microcrystalline particles were produced by deteriorated reaction conditions such as the decreased surface areas of MAP crystalline particles and the decreased reaction efficiency resulting from the increased particle diameter of MAP crystalline particles.

**Table 11: Water feeding conditions in Comparative example 3**

| | |
|---|---|
| Flow rate of raw water (m³/d) | 8.5 |
| Flow rate of recycled effluent (m³/d) | 8.5 |
| LV (m/hr) in the upper part of the column | 9 |
| LV (m/hr) in the lower part of the column | 40 |
| Initial diameter of MAP particles (mm) | 1.5 |

**Table 12: Water quality of raw water and effluent in Comparative example 3**

| | Raw water | Effluent |
|---|---|---|
| pH | 7.7 | 8.6 |
| SS (mg/L) | 210 | 400 |
| Soluble PO₄-P (mg/L) | 108 | 5.0 |
| T-P (mg/L) | 120 | 40 |
| NH₄-N (mg/L) | 230 | 180 |
| Mg (mg/L) | 3.0 | 50 |

### Example 4 (not according to the invention)

Effluent from methane fermentation was used to perform a phosphorus removal treatment in the treatment system shown in Fig. 14. First crystallization reactor 102 was a cylindrical column having an upper inner diameter of 300 mm and a lower inner diameter of 50 mm and a height of 3.0 m, and an inner cylinder 161 having an inner diameter of 150 mm and a height of 1.2 m was included. Second crystallization reactor 103 was a column having an inner diameter of 150 mm and a height of 3600 mm. Each reactor was equipped with a pH meter (not shown). Effluent from methane fermentation was combined with phosphorus and ammonium at specific concentrations shown in Table 14 and supplied as an upflow of influent (raw water) 105 from the bottom of first crystallization reactor 102 and the bottom of second crystallization reactor 103. Magnesium ion and an alkali were also supplied to first crystallization reactor 102 and second crystallization reactor 103. When the operation was started, MAP particles having a particle diameter of 1.5 mm were added as crystal nuclei to the second crystallization reactor (in an amount equivalent to a plate height of about 2 m). Effluent containing microcrystalline particles from second crystallization reactor 103 was supplied into upper inner cylinder 161 in first crystallization reactor 102. Air was injected from the bottom of first crystallization reactor 102 at 1 L/min by aerator 171. A part of effluent 107 from first crystallization reactor 102 was supplied to second crystallization reactor 103. Water feeding conditions are shown in Table 13. Crystalline particles accumulated at the bottom of first crystallization reactor 102 were supplied to the bottom of second crystallization reactor 103 via transfer pipe 162 every 7 days. Grown crystalline particles were recovered from the bottom of second crystallization reactor 103 at appropriate time.

**Table 13: Water feeding conditions in Example 4**

| | First crystallization reactor | Second crystallization reactor |
|---|---|---|
| Flow rate of raw water (m³/d) | 0.3 | 8.5 |
| Flow rate of recycled effluent (m³/d) | - | 8.5 |
| LV (m/hr) | 14 (upper part) 6 (lower part) | 40 |
| Initial diameter of MAP particles (mm) | - | 1.5 |

The water quality of effluent after continuous water feeding for 30 days is shown in Table 14. As compared with T-P content =118 mg/L of raw water, T-P of effluent 107 was 16.4 mg/L, showing a phosphorus removal of 86%. The average diameter of MAP particles in second crystallization reactor 103 was stable in the range of 1.2-1.5 mm without extremely small or extremely large particles.

**Table 14: Water quality of raw water and effluent in Example 4**

| | Raw water | Effluent |
|---|---|---|
| pH | 7.9 | 8.3 |
| SS (mg/L) | 190 | 220 |
| Soluble PO₄- (mg/L) | 106 | 5.0 |
| T-P (mg/L) | 118 | 16.4 |
| NH₄-N (mg/L) | 246 | 210 |
| Mg (mg/L) | 2.6 | 50 |

### Comparative example 4

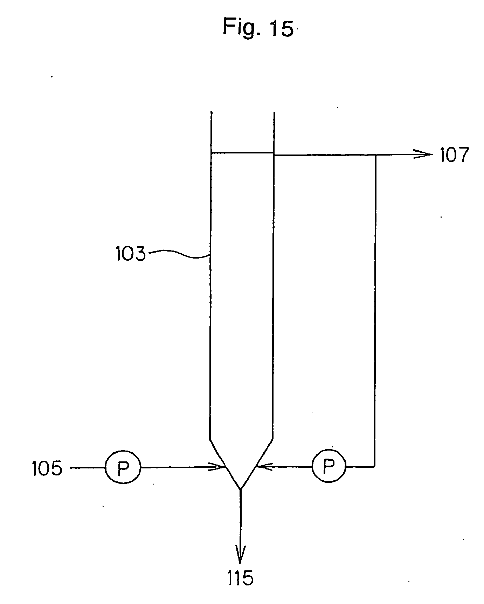

Effluent from methane fermentation was used to perform a comparative experiment in the treatment system shown in Fig. 15. The experimental apparatus in the present comparative example was similar to the apparatus used in Example 4 except that first crystallization reactor 102 was absent. Effluent from methane fermentation was combined with phosphorus and ammonium at specific concentrations shown in Table 16 and used as influent (raw water), and raw water 105 and magnesium and an alkali were supplied to the bottom of crystallization reactor 103 under the water feeding conditions shown in Table 15. When the operation was started, MAP particles having a particle diameter of 1.5 mm were added as crystal nuclei to the second crystallization reactor (in an amount equivalent to a plate height of about 2 m). Grown MAP particles in crystallization reactor 103 were extracted from 115 at appropriate time. In the same manner as in Example 4, a part of effluent 107 from crystallization reactor 103 was recycled to crystallization reactor 103.

**Table 15: Water feeding conditions in Comparative example 4**

| | |
|---|---|
| Flow rate of raw water (m³/d) | 8.5 |
| Flow rate of recycled effluent (m³/d) | 8.5 |
| LV (m/hr) | 40 |
| Initial diameter of MAP particles (mm) | 1.5 |

The water quality of effluent after continuous water feeding for 30 days is shown in Table 16. As compared with T-P content =106 mg/L of raw water, T-P of effluent 107 was 40.5 mg/L, showing a phosphorus removal of 62%. After 30 days, MAP particles in the crystallization reactor grew to an average diameter of 3.1 mm and showed degraded fluidization and lowered removal.

**Table 16: Water quality of raw water and effluent in Comparative example 4**

| | Raw water | Effluent |
|---|---|---|
| pH | 7.7 | 8.3 |
| SS (mg/L) | 210 | 400 |
| Soluble PO₄-P (mg/L) | 98 | 6.0 |
| T-P (mg/L) | 106 | 40.5 |
| NH₄-N (mg/L) | 230 | 190 |
| Mg (mg/L) | 2.6 | 55 |

### Example 5 (not according to the invention

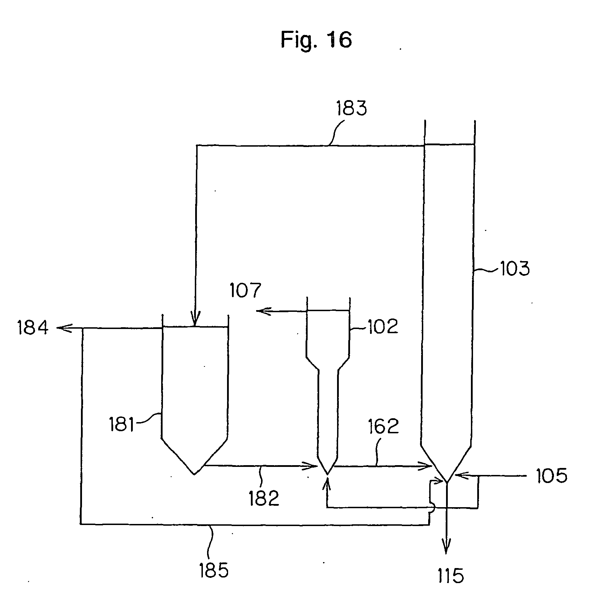

An experiment was performed using the crystallization reactor shown in Fig. 16. The apparatus shown in Fig. 16 comprises a settling tank 181 in addition to a first crystallization reactor 102 and a second crystallization reactor 103. First crystallization reactor 102 was a column having an upper inner diameter of 100 mm and a lower inner diameter of 50 mm and a height of 2000 mm, second crystallization reactor 103 was a column having an inner diameter of 150 mm and a height of 4000 mm, and settling tank 181 was a column having an inner diameter of 300 mm and a height of 2400 mm.

Actual wastewater consisting of anaerobically treated food wastewater combined with city water, ammonium chloride and monopotassium phosphate was used as raw water. Properties of the raw water are shown in Table 18.

Raw water 105 was supplied in upflow to the bottom of each of first crystallization reactor 102 and second crystallization reactor 103. When the operation was started, MAP particles having a particle diameter of 1.4 mm were added as crystal nuclei to the second crystallization reactor (in an amount equivalent to a plate height of about 2 m). Operating conditions in each crystallization reactor are shown in Table 17. Magnesium ion and an alkali were also supplied to each crystallization reactor to form MAP crystalline particles.

Effluent 183 containing MAP microcrystalline particles from the top of second crystallization reactor 103 was supplied to settling tank 181 and separated between solids and liquid by gravity settling. MAP microparticles settled in settling tank 181 and deposited at the bottom of settling tank 181 were intermittently transferred to the bottom of first crystallization reactor 102 via MAP microcrystalline particle transfer pipe 182 so that crystals were grown in first crystallization reactor 102. The liquid flowing out from the top of first crystallization reactor 102 was recovered as effluent 107. Effluent 184 from settling tank 181 was partially recycled to the bottom of second crystallization reactor 103 via bypass returning pipe 185 and the remainder was discharged out of the system.

In first crystallization reactor 102, MAP microcrystalline particles transferred from second crystallization reactor 103 were grown to about 300-500 µm. The residence time was about 10 days.

The MAP crystalline particles grown in first crystallization reactor 102 were transferred to second crystallization reactor 103 as a dispersion having a concentration of about 50 g/L at a flow rate of about 2.8 L/d.

The water quality of effluent after continuous water feeding for 30 days is shown in Table 18. As compared with T-P =142 mg/L of raw water, T-P of effluent 107 was 16.6 mg/L, showing a phosphorus removal of 88%.

The average diameter of MAP crystalline particles in second crystallization reactor 103 was 1.5 mm after operation for 10 days as compared with 1.4 mm at the start of measurement, showing that a stable treatment could be achieved with little increase of the average diameter.

**Table 17: Water feeding conditions in Example 5**

| | First crystallization reactor | Second crystallization reactor |
|---|---|---|
| Flow rate of raw water (m³/d) | 0.6 | 6.6 |
| Flow rate of recycled effluent from settling tank (m³/d) | - | 18.9 |
| LV (m/hr) | 3 (upper part) 13 (lower part) | 60 |
| Mg/P molar ratio added* | 1.2 | 1.2 |

| | | |
|---|---|---|
| * The number of moles of Mg added (mol/hr)/the number of moles of P in raw water (mol/hr) | | |

**Table 18: Water quality of raw water and effluent in Example 5**

| | Raw water | Effluent |
|---|---|---|
| pH | 7.9 | 8.3 |
| Alkalinity (mg/L) | 553 | 503 |
| SS (mg/L) | 166 | 228 |
| T-P (mg/L) | 142 | 16.6 |
| NH₄-N (mg/L) | 233 | 174 |
| Mg (mg/L) | 3.4 | 68.5 |

### Comparative example 5

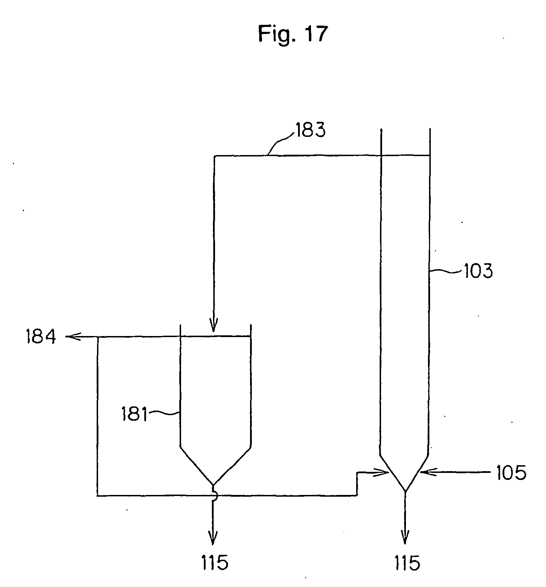

An experiment was performed in the same manner as in Example 5 using the apparatus shown in Fig. 17. The apparatus shown in Fig. 17 was similar to the apparatus used in Example 5 except that first crystallization reactor 102 was absent. In the same manner as in Example 5, city water combined with ammonium chloride and monopotassium phosphate was supplied as raw water to the bottom of crystallization reactor 103 under the water feeding conditions shown in Table 19. Magnesium ion and an alkali were also supplied to crystallization reactor 103 to form/grow MAP crystalline particles. When the operation was started, MAP particles having a particle diameter of 1.8 mm were added as crystal nuclei to the crystallization reactor (in an amount equivalent to a plate height of about 2 m). Properties of the raw water are shown in Table 20. The effluent from the top of crystallization reactor 103 was supplied to settling tank 181 and crystalline particles were settled by gravity. The liquid flowing out from the top of settling tank 181 was recovered as effluent 184. Effluent 184 was partially recycled to crystallization reactor 103.

The results of the continuous water feeding experiment are shown in Table 20. As compared with T-P =130 mg/L of raw water, T-P of effluent 184 was 24.2 mg/L, showing a phosphorus removal of 81%. The average diameter of MAP particles in crystallization reactor 103 was 2.8 mm after 12 days, i.e. increased by about 1 mm from 1.8 mm at the start of measurement. The amount of fine MAP deposited in settling tank 181 was 0.6 kg/d.

**Table 19: Water feeding conditions in Comparative example 5**

| | Crystallization reactor |
|---|---|
| Flow rate of raw water (m³/d) | 6.6 |
| Flow rate of recycled effluent from settling tank (m³/d) | 18.9 |
| LV (m/hr) | 60 |
| Mg/P molar ratio added | 1.2 |
| MAP packed (mm) | 2000 |

**Table 20: Water quality of raw water and effluent in Comparative example 5**

| | Raw water | Effluent |
|---|---|---|
| pH | 6.1 | 8.3 |
| Alkalinity (mg/L) | 450 | 550 |
| SS (mg/L) | 299 | 333 |
| T-P (mg/L) | 130 | 24.2 |
| NH₄-N (mg/L) | 216 | 185 |
| Mg (mg/L) | 4.6 | 43.2 |

### INDUSTRIAL APPLICABILITY

According to the present invention, a multistage crystallization apparatus is used in which crystalline particles are gradually grown in stages, whereby operating conditions of the reactor at each stage can be optimized to suit the diameter of particles flown in the reactor so that the overall crystallization reaction efficiency can be greatly improved. In a second aspect of the present invention, various problems caused by microcrystalline particles generated in the reactors can be solved and the crystallization reaction efficiency can be further improved by transferring microcrystalline particles in a reactor at a later stage to a reactor at an earlier stage where they are grown and thus grown particles are successively transferred to the subsequent reactors.

The present invention can be applied to remove phosphate ion by separating out crystals of calcium phosphate or hydroxyapatite from wastewaters such as secondary sewage effluent and sidestreams from sludge treatment systems; to remove fluorine in wastewater from semiconductor factories by separating out crystals of calcium fluoride from the wastewater; to remove calcium ion by separating out crystals of calcium carbonate from service water derived from groundwater, wastewater and refuse leachate; to lower the hardness of hard water containing much carbonate ion by separating out crystals of calcium carbonate; to remove Mn among impurities in tap water as manganese carbonate; or to separate out magnesium ammonium phosphate (MAP) from the filtrate of sludge from anaerobic digestion or wastewater from fertilizer factories.

## Claims

1. An apparatus for removing an ion to be removed in an influent by crystallization, comprising
a multistage crystallization apparatus (1) comprising two or more crystallization reactors (2, 3, 4) for growing crystalline particles of a slightly soluble salt of the ion to be removed,
an influent feed pipe (5, 8, 9) for supplying the influent to each of said crystallization reactors (2, 3, 4),
a salt-forming ion feed pipe (6) for supplying an ion capable of reacting with the ion to be removed to form a slightly soluble salt to each of said crystallization reactors (2, 3, 4),
a crystalline particle transfer pipe (10) for transferring crystalline particles grown in a crystallization reactor (2, 3) at an earlier stage to the crystallization reactor (3, 4) at the subsequent stage,
**characterized by**
a microcrystalline particle transfer pipe (14) for transferring microcrystalline particles contained in a crystallization reactor (3, 4) at a later stage to a crystallization reactor (2, 3) at an earlier stage; and
wherein the transfer pipe (10) used for transferring grown crystalline particles from a crystallization reactor (2, 3) at an earlier stage to the crystallization reactor (3, 4) at the subsequent stage is an airlift pipe (10).

2. The apparatus of claim 1 comprising a crystalline particle recovery pipe (15) for recovering crystalline particles from the crystallization reactor (4) at the final stage.

3. The apparatus of claim 1 or 2 wherein a crystal nucleus feed pipe (26) for supplying crystal nuclei is connected to the crystallization reactor (2) at the first stage.

4. The apparatus of any one of claims 1 to 3 adapted to be used for removing phosphorus from a phosphorus-containing influent by crystallizing magnesium ammonium phosphate from the influent.

5. A process using an apparatus according to any of the preceding claims for removing an ion to be removed in an influent by crystallization, comprising supplying the influent and an ion capable of reacting with the ion to be removed to form a slightly soluble salt to each crystallization reactor (2, 3, 4) of the multistage crystallization apparatus (1) to grow crystalline particles of the slightly soluble salt of the ion to be removed, and successively transferring the crystalline particles grown in a crystallization reactor (2, 3) at an earlier stage to the crystallization reactor (3, 4) at the subsequent stage so that crystalline particles having larger average particle diameters are fluidized in reactors at later stages.

6. The process of claim 5 comprising recovering crystalline particles from the crystallization reactor (4) at the final stage.

7. The process of claim 5 or 6 comprising generating and growing crystal nuclei of a slightly soluble salt of the ion to be removed in the crystallization reactor (2) at the first stage, and successively transferring thus grown crystalline particles to the crystallization reactor (3, 4) at the subsequent stages so that crystalline particles having larger average particle diameters are fluidized in reactors (3, 4) at later stages.

8. The process of claim 5 or 6 comprising adding crystal nuclei to the crystallization reactor (2) at the first stage and growing them in the reactor (2), and successively transferring thus grown crystalline particles to the crystallization reactor (3, 4) at the subsequent stages so that crystalline particles having larger average particle diameters are fluidized in reactors (3, 4) at later stages.

9. The process of any one of claims 5 to 8 comprising transferring microcrystalline particles contained in a crystallization reactor (3, 4) at a later stage to a crystallization reactor (2, 3) at an earlier stage and growing them, and successively transferring thus grown crystalline particles to the crystallization reactor (3, 4) at the subsequent stages.

10. The process of any one of claims 5 to 9 for removing phosphorus from a phosphorus-containing influent by crystallizing magnesium ammonium phosphate from the influent.

## Patentansprüche

1. Eine Vorrichtung zum Entfernen von Ionen, die aus einem Zufluss durch Kristallisation entfernt werden sollen, wobei die Vorrichtung Folgendes aufweist:
eine Mehrstufen-Kristallisationsvorrichtung (1), die zwei oder mehr Kristallisationsreaktoren (2, 3, 4) aufweist zum Züchten von kristallinen Partikeln eines leicht löslichen Salzes der zu entfernenden Ionen,
eine Zuflussspeiseleitung (5, 8, 9) zum Liefern des Zuflusses an jeden der Kristallisationsreaktoren (2, 3, 4),
eine Speiseleitung (6) für salzbildende Ionen zum Liefern von Ionen, die geeignet sind, mit den zu entfernenden Ionen zu reagieren, um ein leicht lösliches Salz zu bilden, und zwar an jeden der Kristallisationsreaktoren (2, 3, 4),
eine Übertragungsleitung (10) für kristalline Partikel zum Übertragen kristalliner Partikel, die einem Kristallisationsreaktor (2, 3) in einer früheren Stufe gezüchtet wurden, zu einem Kristallisationsreaktor (3, 4) in der folgenden Stufe,
**gekennzeichnet durch**
eine Übertragungsleitung (14) für mikrokristalline Partikel zum Übertragen mikrokristalliner Partikel, die in einem Kristallisationsreaktor (3, 4) in einer späteren Stufe enthalten sind, zu einem Kristallisationsreaktor (2, 3) in einer früheren Stufe; und
wobei die Übertragungsleitung (10), die verwendet wird, um gezüchtete kristalline Partikel von einem Kristallisationsreaktor (2, 3) in einer früheren Stufe zu dem Kristallisationsreaktor (3, 4) in der nachfolgenden Stufe zu übertragen, eine Lufthubleitung (10) ist.

2. Die Vorrichtung nach Anspruch 1, wobei diese eine Rückgewinnungsleitung (15) für kristalline Partikel aufweist zur Rückgewinnung kristalliner Partikel von dem Kristallisationsreaktor (4) in der letzten Stufe.

3. Die Vorrichtung nach Anspruch 1 oder 2, wobei eine Kristallisationskeimspeiseleitung (26) zum Liefern von Kristallisationskeimen mit dem Kristallisationsreaktor (2) in der ersten Stufe verbunden ist.

4. Die Vorrichtung nach einem der Ansprüche 1 bis 3, wobei diese geeignet ist, um für das Entfernen von Phosphor aus einem Phosphor enthaltenden Zufluss durch Kristallisieren von Magnesium-Ammonium-Phosphat aus dem Zufluss verwendet zu werden.

5. Ein Prozess, der eine Vorrichtung nach einem der vorhergehenden Ansprüche zur Entfernung von Ionen verwendet, die aus einem Zufluss durch Kristallisation entfernt werden sollen, wobei der Prozess Folgendes aufweist:
Liefern des Zuflusses und Liefern von Ionen, die geeignet sind, mit den zu entfernenden Ionen zu reagieren, um ein leicht lösliches Salz zu bilden, und zwar an jeden Kristallisationsreaktor (2, 3, 4) der mehrstufigen Kristallisationsvorrichtung (1), um kristalline Partikel des leicht löslichen Salzes der zu entfernenden Ionen zu züchten, und
sukzessives Übertragen der kristallinen Partikel, die in einem Kristallisationsreaktor (2, 3) in einer früheren Stufe gezüchtet wurden, zu dem Kristallisationsreaktor (3, 4) in der darauf folgenden Stufe, so dass kristalline Partikel mit einem größeren mittleren Partikeldurchmesser in Reaktoren in späteren Stufen verflüssigt bzw. fluidisiert werden.

6. Der Prozess nach Anspruch 5, wobei dieser ferner das Zurückgewinnen kristalliner Partikel aus dem Kristallisationsreaktor (4) in der letzten Stufe aufweist.

7. Der Prozess nach Anspruch 5 oder 6, wobei dieser Folgendes aufweist:
Erzeugen und Züchten von Kristallisationskeimen eines leicht löslichen Salzes der zu entfernenden Ionen in dem Kristallisationsreaktor (2) in der ersten Stufe, und
sukzessives Übertragen der so gezüchteten kristallinen Partikel zu dem Kristallisationsreaktor (3, 4) in den darauf folgenden Stufen, so dass kristalline Partikel mit einem größeren mittleren Partikeldurchmesser in den Reaktoren (3, 4) in späteren Stufen verflüssigt bzw. fluidisiert werden.

8. Der Prozess nach Anspruch 5 oder 6, wobei dieser Folgendes aufweist:
Zufügen von Kristallisationskeimen zu dem Kristallisationsreaktor (2) in der ersten Stufe und Züchten derselben in dem Reaktor (2), und
sukzessives Übertragen der so gezüchteten kristallinen Partikel zu dem Kristallisationsreaktor (3, 4) in den folgenden Stufen, so dass kristalline Partikel mit einem größeren mittleren Partikeldurchmesser in Reaktoren (3, 4) in späteren Stufen verflüssigt bzw. fluidisiert werden.

9. Der Prozess nach einem der Ansprüche 5 bis 8, wobei dieser Folgendes aufweist:
Übertragen mikrokristalliner Partikel, die in einem Kristallisationsreaktor (3, 4) in einer späteren Stufe enthalten sind, zu einem Kristallisationsreaktor (2, 3) in einer früheren Stufe, und Züchten derselben, und
sukzessives Übertragen der so gezüchteten kristallinen Partikel zu dem Kristallisationsreaktor (3, 4) in den folgenden Stufen.

10. Der Prozess nach einem der Ansprüche 5 bis 9, wobei dieser das Entfernen von Phosphor aus einem Phosphor enthaltenden Zufluss durch Kristallisieren von Magnesium-Ammonium-Phosphat aus dem Zufluss aufweist.

## Revendications

1. Appareil pour éliminer un ion à éliminer dans un influent par cristallisation, comprenant
un appareil de cristallisation à plusieurs étages (1) comprenant deux réacteurs de cristallisation (2, 3, 4) ou plus permettant de faire croître des particules cristallines d'un sel légèrement soluble de l'ion à éliminer,
un tuyau d'alimentation en influent (5, 8, 9) permettant de fournir l'influent à chacun desdits réacteurs de cristallisation (2, 3, 4),
un tuyau d'alimentation en ion formant un sel (6) permettant de fournir un ion capable de réagir avec l'ion à éliminer pour former un sel légèrement soluble à chacun desdits réacteurs de cristallisation (2, 3, 4),
un tuyau de transfert de particules cristallines (10) permettant de transférer des particules cristallines mises à croître dans un réacteur de cristallisation (2, 3) à un étage antérieur au réacteur de cristallisation (3, 4) vers l'étage ultérieur,
**caractérisé par**
un tuyau de transfert de particules microcristallines (14) permettant de transférer des particules microcristallines contenues dans un réacteur de cristallisation (3, 4) à un étage postérieur à un réacteur de cristallisation (2, 3) vers un étage antérieur ; et
où le tuyau de transfert (10) utilisé pour transférer des particules cristallines mises à croître d'un réacteur de cristallisation (2, 3) à un étage antérieur vers le réacteur de cristallisation (3, 4) à l'étage ultérieur est un tuyau à circulation d'air (10).

2. Appareil selon la revendication 1, comprenant un tuyau de récupération de particules cristallines (15) permettant de récupérer les particules cristallines du réacteur de cristallisation (4) à l'étage final.

3. Appareil selon la revendication 1 ou 2, dans lequel un tuyau d'alimentation en noyaux de cristaux (26) permettant de fournir des noyaux de cristaux est raccordé au réacteur de cristallisation (2) à l'étage final.

4. Appareil selon l'une quelconque des revendications 1 à 3, adapté pour être utilisé pour éliminer le phosphore d'un influent contenant du phosphore par cristallisation de phosphate d'ammonium et de magnésium de l'influent.

5. Procédé utilisant un appareil selon l'une quelconque des revendications précédentes, pour éliminer un ion à éliminer dans un influent par cristallisation, comprenant les étapes consistant à :
fournir l'influent et un ion capable de réagir avec l'ion à éliminer pour former un sel légèrement soluble à chaque réacteur de cristallisation (2, 3, 4) de l'appareil de cristallisation multiétages (1) pour faire croître des particules cristallines du sel légèrement soluble de l'ion à éliminer, et
transférer successivement les particules cristallines mises à croître dans un réacteur de cristallisation (2, 3) à un étage ultérieur vers le réacteur de cristallisation (3, 4) à l'étage ultérieur de sorte que des particules cristallines ayant des diamètres moyens de particule plus grands sont fluidisées dans des réacteurs à des étages postérieurs.

6. Procédé selon la revendication 5, comprenant l'étape consistant à récupérer des particules cristallines à partir du réacteur de cristallisation (4) à l'étage final.

7. Procédé selon la revendication 5 ou 6, comprenant les étapes consistant à générer et faire croître des noyaux de cristaux d'un sel légèrement soluble de l'ion à éliminer dans le réacteur de cristallisation (2) au premier étage, et transférer successivement les particules cristallines ainsi mises à croître vers le réacteur de cristallisation (3, 4) aux étages ultérieurs de sorte que des particules cristallines ayant des diamètres moyens de particule plus grands sont fluidisées dans les réacteurs (3, 4) à des étages postérieurs.

8. Procédé selon la revendication 5 ou 6, comprenant les étapes consistant à ajouter des noyaux de cristaux au réacteur de cristallisation (2) au premier étage et les faire croître dans le réacteur (2) et transférer successivement les particules cristallines ainsi mises à croître vers le réacteur de cristallisation (3, 4) aux étages ultérieurs de sorte que les particules cristallines ayant des diamètres moyens de particule plus grands sont fluidisées dans des réacteurs (3, 4) aux étages postérieurs.

9. Procédé selon l'une quelconque des revendications 5 à 8, comprenant les étapes consistant à transférer les particules microcristallines contenues dans un réacteur de cristallisation (3, 4) à un étage postérieur vers un réacteur de cristallisation (2, 3) à un étage antérieur et les faire croître, et transférer successivement les particules cristallines ainsi mises à croître vers le réacteur de cristallisation (3, 4) aux étages ultérieurs.

10. Procédé selon l'une quelconque des revendications 5 à 9, permettant d'éliminer le phosphore d'un influent contenant du phosphore par cristallisation de phosphate de magnésium ammonium de l'influent.
